(19) Europäisches Patentamt
European Patent Office
Office européen des brevets

(11) EP 0 710 680 B1

(12) **EUROPÄISCHE PATENTSCHRIFT**

(45) Veröffentlichungstag und Bekanntmachung des Hinweises auf die Patenterteilung:
**19.03.2003 Patentblatt 2003/12**

(51) Int Cl.[7]: **C08F 291/00**, C08F 2/22

(21) Anmeldenummer: **95116860.8**

(22) Anmeldetag: **26.10.1995**

# (54) Wässrige Polymerisatdispersion

Aqueous polymer dispersion

Dispersion aqueuse de polymère

(84) Benannte Vertragsstaaten:
**AT BE CH DE DK ES FR GB IT LI NL**

(30) Priorität: **04.11.1994 DE 4439459**

(43) Veröffentlichungstag der Anmeldung:
**08.05.1996 Patentblatt 1996/19**

(73) Patentinhaber: **BASF AKTIENGESELLSCHAFT
67056 Ludwigshafen (DE)**

(72) Erfinder:
- **Baumstark, Roland, Dr.
D-67434 Neustadt (DE)**
- **Portugall, Michael, Dr.
D-67157 Wachenheim (DE)**
- **Dersch, Rolf, Dr.
D-67434 Neustadt (DE)**
- **Schweigger, Enrique, Dr.
D-67063 Ludwigshafen (DE)**

(56) Entgegenhaltungen:
**EP-A- 0 184 091**
**EP-A- 0 429 207**
**EP-A- 0 522 789**
**EP-A- 0 609 756**
**EP-A- 0 609 793**
**EP-A- 0 623 659**
**WO-A-95/16720**
**DE-A- 3 418 524**
**US-A- 4 263 193**
**US-A- 5 021 469**
**US-A- 5 185 387**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 710 680 B1

Printed by Jouve, 75001 PARIS (FR)

## Beschreibung

Die vorliegende Erfindung betrifft eine wäßrige Polymerisatdispersion, dadurch erhaltlich, daß man eine Zusammensetzung 1 von wenigstens eine ethylenisch ungesättigte Gruppe aufweisenden Verbindungen (Monomeren) nach der Methode der radikalischen wäßrigen Emulsionspolymerisation bis zu einem Umsatz von wenigstens 90, vorzugsweise wenigstens 95 und besonders bevorzugt wenigstens 98 Gew.-%, bezogen auf die zu polymerisierende Monomerenzusammensetzung 1, polymerisiert (Polymerisationsstufe 1) und daran anschließend im Beisein des Produktgemisches der Polymerisationsstufe 1 eine Zusammensetzung 2 von wenigstens eine ethylenisch ungesättigte Gruppe aufweisenden Verbindungen (Monomeren) nach der Methode der radikalischen wäßrigen Emulsionspolymerisation mit der Maßgabe polymerisiert (Polymerisationsstufe 2), daß

a) die Zusammensetzung 1 so beschaffen ist, daß bei alleiniger statistischer Copolymerisation der Zusammensetzung 1 ein Polymerisat 1 erhalten würde, dessen Glasübergangstemperatur mit zunehmendem Molekulargewicht dem Grenzwert $Tg^1$ zustrebt,

b) die Zusammensetzung 2 so beschaffen ist, daß bei alleiniger statistischer Copolymerisation der Zusammensetzung 2 ein Polymerisat 2 erhalten würde, dessen Glasübergangstemperatur mit zunehmendem Molekulargewicht dem Grenzwert $Tg^2$ zustrebt,

c) der Betrag der Differenz zwischen $Tg^1$ und $Tg^2$ wenigstens 30°C beträgt,

d) zusätzlich zu den Monomeren der Zusammensetzungen 1 und 2 wenigstens ein von diesen Monomeren verschiedenes, wenigstens eine ethylenisch ungesättigte Gruppe und das Element Stickstoff enthaltendes Haftmonomeres in einer Menge von 0,1 bis 10 Gew.-%, häufig 0,5 bis 5 Gew.-%, vorzugsweise 1 bis 3 Gew.-%, bezogen auf die Gesamtmenge der zu polymerisierenden Monomeren, einpolymerisiert wird,

e) von der Gesamtmenge der gemäß d) einzupolymerisierenden Haftmonomeren 20 bis 100 mol-% in der Polymerisationsstufe 1 miteinpolymerisiert werden und

f) die Menge derjenigen Zusammensetzung i, der der tiefere Grenzwert $Tg^i$ zuzuordnen ist, bezogen auf die Gesamtmenge der Zusammensetzungen 1 und 2, 40 bis 90 Gew.-% betragt.

Ferner betrifft vorliegende Erfindung Verfahren zur Herstellung erfindungsgemäßer wäßriger Polymerisatdispersionen sowie deren Verwendung zum Beschichten, Kleben, Dichten oder Imprägnieren, wobei die Verwendung als Bindemittel für Anstrichmittel und insbesondere Lasuren bevorzugt ist.

Wäßrige Polymerisatdispersionen sind fluide Systeme, die als disperse Phase in wäßrigem Dispergiermedium Polymerisatteilchen in stabiler disperser Verteilung befindlich enthalten. Der Durchmesser der Polymerisatteilchen liegt im allgemeinen hauptsächlich im Bereich von 0,01 bis 5 µm, häufig hauptsächlich im Bereich von 0,01 bis 1 µm.

Ebenso wie Polymerisatlösungen beim Verdampfen des Lösungsmittels weisen wäßrige Polymerisatdispersionen beim Verdampfen des wäßrigen Dispergiermediums die Fähigkeit auf, transparente Polymerisatfilme zu bilden, weshalb wäßrige Polymerisatdispersionen in vielfacher Weise als Bindemittel, z.B. für Anstrichfarben oder Massen zum Beschichten von Leder, Anwendung finden.

Ob eine wäßrige Polymerisatdispersion nach Verdampfen des Wassers einen zusammenhängenden transparenten Film bildet oder eine spröde, trübe pulverisierbare Schicht entsteht, ist jedoch im Unterschied zur Polymerisatlösung abhängig von der Art des dispergierten Polymerisats und von der Temperatur, bei der die Filmbildung erfolgt. Die tiefste Temperatur, bei der gerade noch ein transparenter, nicht rissiger Film gebildet wird, soll nachfolgend als Mindest-Filmbilde-Temperatur (MFT) der betreffenden wäßrigen Polymerisatdispersion bezeichnet werden. Unterhalb der MFT erhält man keine Filmbildung (vgl. Ullmanns Encyklopädie der technischen Chemie, Bd. 19, 4. Auflage, Verlag Chemie, Weinheim (1980), S. 17).

Es ist allgemein bekannt, daß wäßrige Polymerisatdispersionen von Polymerisaten, die im wesentlichen nur solche Monomeren einpolymerisiert enthalten, deren Homopolymerisate tiefliegende Glasübergangstemperaturen Tg (Tg meint in dieser Schrift den Grenzwert der Glasübergangstemperatur, dem diese gemäß G. Kanig, Kolloid-Zeitschrift & Zeitschrift für Polymere, Bd. 190, S. 1, Gleichung 1, mit zunehmendem Molekulargewicht zustrebt, ermittelt nach dem DSC-Verfahren (Differential Scanning Calorimetry, 20°C/min, midpoint); die Tg-Werte für die Homopolymerisate der meisten Monomeren sind bekannt und z.B. in Ullmann's Encyclopedia of Industrial Chemistry, VCH Weinheim, 1992, fifth edition, Vol. A21, S. 169 aufgeführt; weitere Quellen für Glasübergangstemperaturen von Homopolymerisaten bilden z.B. J. Brandrup, E.H. Immergut, Polymer Handbook 1st Ed. J. Wiley, New York 1966, 2nd Ed. J. Wiley, New York 1975, und 3rd Ed. J. Wiley, New York, 1989) aufweisen (sogenannte weiche Monomeren), in der Regel auch

bei entsprechend tiefen Temperaturen noch Polymerisatfilme zu bilden vermögen. Nachteilig an den dabei resultierenden Verfilmungen ist jedoch, daß sie für viele Anwendungsgebiete zu weich und zu klebrig sind. Dies ist insofern von Nachteil, als solche Verfilmungen z.B. durch Anhaften von Staub leicht verschmutzen. Insbesondere verfügen auf der Basis solcher Verfilmungen erzeugte Beschichtungen normalerweise auch über eine tiefliegende Blocktemperatur. Letzteres ist diejenige Temperatur bei der solche Beschichtungen miteinander verkleben, wenn sie unter einem vorgegebenen Anpreßdruck für einige Zeit miteinander in Kontakt gebracht werden. Oberhalb der Blocktemperatur haften die Beschichtungen aneinander und lassen sich nicht mehr voneinander trennen, ohne daß die Beschichtungen dabei verletzt werden. Ein Verblocken kann auch dann noch auftreten, wenn die Beschichtungen keine Anfaßklebrigkeit aufweisen. Die Blocktemperatur ist insbesondere dann von Bedeutung, wenn mit Beschichtungen auf der Basis wäßriger Polymerisatdispersionen versehene Substrate aufeinander gestapelt oder frisch gestrichene Fenster geschlossen werden sollen. Bei einem unterhalb der Blocktemperatur erfolgenden in Kontakt bringen der Beschichtungen lassen sich diese im wesentlichen ohne Kraftaufwand und unversehrt wieder voneinander trennen.

Es ist auch allgemein bekannt, daß wäßrige Polymerisatdispersionen von Polymerisaten, die im wesentlichen nur harte Monomere (solche Monomere, deren Homopolymerisate eine erhöhte Glasübergangstemperatur Tg aufweisen) einpolymerisiert enthalten, in der Regel eine erhöhte Blocktemperatur aufweisen. Nachteilig an diesen wäßrigen Polymerisatdispersionen ist jedoch, daß sie auch einer erhöhten Temperatur zum Verfilmen bedürfen.

Durch Copolymerisation von harten und weichen Monomeren oder durch Abmischen von wäßrigen Polymerisatdispersionen harter Polymerisate mit wäßrigen Polymerisatdispersionen weicher Polymerisate oder durch Zusatz weichmachender Mittel lassen sich MFT und Blocktemperatur (BT) zwar in bestimmtem Ausmaß der gewünschten Anwendung anpassen. Nachteilig an diesen Anpassungsmaßnahmen ist jedoch, daß sie in der Regel MFT und BT im selben Ausmaß verändern. D.h. die BT wird durch sie üblicherweise in vergleichbarem Ausmaß erhöht bzw. erniedrigt wie die MFT.

Anwendungstechnisch erwünscht sind jedoch solche Anpassungsmaßnahmen, die die Temperaturdifferenz zwischen MFT und BT zu vergrößern vermögen.

Aus der EP-A 184 091, der EP-A 376 096, der DE-AS 12 20 613, der US-A 3,454,516, der EP-A 609 756 und der EP-A 379 892 ist bekannt, daß vorgenannte Zielsetzung im wesentlichen dadurch realisiert werden kann, daß man die radikalische wäßrige Emulsionspolymerisation räumlich vereint in zwei zeitlich aufeinanderfolgenden Stufen durchführt, wobei eine der beiden Stufen hauptsachlich weiche Monomere und die andere Stufe hauptsächlich harte Monomere umfaßt. In überraschender Weise spielt dabei die Abfolge der beiden Stufen, d.h. ob zunächst die harte Stufe und dann die weiche Stufe oder umgekehrt polymerisiert wird, eine eher untergeordnete Rolle. So lehrt die EP-A 379 892 beispielsweise die Abfolge hart/weich, wohingegen die EP-A 184 091 die Abfolge weich/hart lehrt. Sowohl die EP-A 184 091 als auch die EP-A 379 892 lehren darüber hinaus, in der zweiten Polymerisationsstufe ein stickstoffhaltiges Haftmonomer einzupolymerisieren, um die Haftung der Verfilmungen solcher wäßriger Polymerisatdispersionen auf zahlreichen Materialien wie Holz, Metall, Mineralien, Papier, Textilien und Kunststoff, insbesondere aber auf alten Anstrichen auf der Basis trocknender Öle und/oder Alkydharze, zu erhöhen und die Empfindlichkeit der Haftung gegenüber der Einwirkung von Feuchtigkeit und Nässe zu mindern (erhöhte Naßhaftung). Die Plazierung der Naßhaftungsmonomeren in der zweiten Polymerisationsstufe entspringt der Vorstellung, daß dadurch dispergierte Polymerisatpartikel erzeugt werden, die die Haftmonomeren insbesondere auf ihrer Oberfläche lokalisiert aufweisen, was deren haftungsverbessernde Wechselwirkung mit dem zu beschichtenden Substrat begünstigen sollte.

Die Lehre der EP-A 609 756 umfaßt sowohl die Abfolge hart/weich als auch die Abfolge weich/hart. Mit dieser Polymerisationsweise verbindet die EP-A 609 756 die Vorstellung einer Ausbildung von sowohl harten als auch weichen Bezirken innerhalb der dispergierten Polymerisatpartikel. Ferner empfiehlt die EP-A 609 756 ebenfalls die Copolymerisation von Stickstoff enthaltenden Haftmonomeren zur Verbesserung der Naßhaftung. Hinsichtlich der Plazierung der Haftmonomeren führt die EP-A 609 756 aus, sie könnten sowohl nur in den weichen oder nur in den harten Bezirken der Polymerisatpartikel als auch gleichzeitig in den harten und den weichen Bezirken der Polymerisatpartikel plaziert werden (Seite 1, Zeilen 20 bis 22). In allen Ausführungsbeispielen der EP-A 609 756 erfolgt die Realisierung dieser Plazierung so, daß die Gesamtmenge der Haftungsmonomeren als Bestandteil der zweiten Polymerisationsstufe miteinpolymerisiert wird. D.h. auch die EP-A 609 756 geht von der Vorstellung einer bevorzugten Lokalisierung der Haftmonomeren auf der Oberfläche der dispergierten Polymerisatpartikel aus. Dies gilt so auch für die DE-A 39 02 067 und die EP-A 609 793. Damit stellt der Stand der Technik wäßrige Polymerisatdispersionen zur Verfügung, die zwar hinsichtlich der Differenz zwischen MFT und BT sowie in bezug auf Naßhaftung zu befriedigen vermögen, nachteilig an den wäßrigen Polymerisatdispersionen des Standes der Technik ist jedoch, daß ihre Verfilmungen gleichzeitig bezüglich Reißdehnung und Glanz nicht zufriedenstellen. Eine erhöhte Reißdehnung ist insofern von Bedeutung, als die zu beschichtenden Substrate in der Regel Risse und/oder Spalte aufweisen, die sich aufgrund der von Null verschiedenen thermischen Ausdehnungskoeffizienten der Substrate bei Einwirkung von Temperaturschwankungen vergrößern und verkleinern, womit eine Dehnung ihrer Beschichtung einhergehen kann. Dies gilt insbesondere dann, wenn das zu beschichtende Substrat Holz ist. Bei letzterem bewirken insbesondere auch Feuchtigkeitsschwankungen Dehnprozesse.

Aufgabe der vorliegenden Erfindung war es daher, wäßrige Polymerisatdispersionen zur Verfügung zu stellen, die diese Nachteile der wäßrigen Polymerisatdispersionen des Standes der Technik nicht aufweisen.

Demgemäß wurden die eingangs definierten wäßrigen Polymerisatdispersionen gefunden, deren Verfilmungen im Vergleich zu den ihnen nächstliegenden Verfilmungen des Standes der Technik in überraschender Weise einen signifikant erhöhten Glanz sowie eine signifikant erhöhte Reißdehnung aufweisen, ohne daß damit eine nennenswerte Minderung der Naßhaftung einhergeht.

Prinzipiell läßt sich die erfindungsgemäße Verfahrensweise auf alle im Rahmen der Würdigung des Standes der Technik aufgeführten hart/weich bzw. weich/hart Abfolgen in vorteilhafter weise anwenden. Das sind insbesondere diejenigen der EP-A 609 756, der EP-A 379 892, der EP-A 184 091, der EP-A 376 096, der DE-AS 12 20 613 und der US-A 3,454,516.

Vorteilhaft sind jedoch solche erfindungsgemäßen wäßrigen Polymerisatdispersionen, bei denen die Menge derjenigen Monomerenzusammensetzung i, der der tiefere Grenzwerte $Tg^i$ zuzuordnen ist, bezogen auf die Gesamtmenge der Zusammensetzungen 1 und 2, 50 bis 90, besser 60 bis 80, vorzugsweise 70 bis 80 Gew.-% beträgt. Der Betrag der Differenz zwischen $Tg^1$ und $Tg^2$ kann wenigstens 30, 40, 50, 60, 70, 80, 90 aber auch 100°C, 120°C, 150°C oder mehr, in der Regel also 30 bis 150°C, betragen. In anwendungstechnisch zweckmaßiger Weise beträgt der Differenzbetrag zwischen $Tg^1$ und $Tg^2$ 60 bis 120°C oder 40 bis 80°C.

Ferner ist es günstig, wenn der tiefere Grenzwert $Tg^1$ im Bereich -60 bis 35°C, vorzugsweise -30 bis +35°C und ganz besonders bevorzugt im Bereich -20 bis +20°C liegt.

In entsprechender Weise erweist es sich als günstig, wenn der höhergelegene der beiden Grenzwerte $Tg^i$ im Bereich > 50 bis 130°C, vorzugsweise 60 bis 120°C und ganz besonders bevorzugt im Bereich 95 bis 115°C liegt.

Bei vorgegebenem $Tg^i$ für die Monomerenzusammensetzung i laßt sich die Monomerenzusammensetzung i in einfacher Weise mittels der Gleichung nach Fox zusammenstellen. Nach Fox (T.G. Fox, Bull. Am. Phys. Soc. (Ser. II) 1, 123 (1956) und Ullmanns Encyklopädie der technischen Chemie, Verlag Chemie, Weinheim, 1980, Bd. 19, 4. Auflage, S. 18) gilt für die Glasübergangstemperatur von statistischen Mischpolymerisaten in guter Näherung

$$\frac{1}{Tg} = \frac{X^1}{Tg^1} + \frac{X^2}{Tg^2} + \cdots\cdots \frac{X^n}{Tg^n} ,$$

wobei $X^1$, $X^2$, ....., $X^n$ die Massenbrüche der Monomeren 1, 2, ......., n und $Tg^1$, $Tg^2$, ....., $Tg^n$ die Glasübergangstemperaturen der jeweils nur aus einem der Monomeren 1, 2, ....., oder n aufgebauten Polymerisate in Grad Kelvin bedeuten.

Experimentell läßt sich eine statistische Copolymerisation einer Monomerenzusammensetzung i im wesentlichen dadurch realisieren, daß man ein ihr entsprechendes Monomerengemisch nach dem Zulaufverfahren der Methode der radikalischen wäßrigen Emulsionspolymerisation polymerisiert. D.h. man emulgiert das Monomerengemisch in wäßriger Phase vor und und läßt es nach Maßgabe des Verbrauchs dem Polymerisationsgefäß unter Zusatz von Initiatoren so zulaufen, daß der Polymerisationsumsatz der bereits im Polymerisationsgefäß befindlichen Monomeren ≥ 99 Gew.-% beträgt. Als Initiatoren eignen sich vorzugsweise Natriumperoxodisulfat und die Polymerisationstemperatur liegt normalerweise bei 60 bis 90°C. Der Polymerisationsdruck kann je nach Monomeren ≥ 1 atm betragen. Als Dispergiermittel können die in dieser Schrift zur Herstellung der erfindungsgemäßen wäßrigen Polymerisatdispersionen empfohlenen Substanzen angewendet werden. Das Molekulargewicht läßt sich in an sich bekannter Weise durch Mitverwendung von das Molekulargewicht regelnden Substanzen (z.B. Mercaptan) und/oder die verwendete Initiatormengen einstellen. In Abwesenheit von das Molekulargewicht regelnden Substanzen und Verwendung von 0,1 bis 2 Gew.-%, bezogen auf die Monomerenmenge, an Polymerisationsinitiator, läßt sich eine wäßrige Polymerisatdispersion erhalten, deren Glasübergangstemperatur dem Grenz-Tg entspricht.

Unter den erfindungsgemäßen wäßrigen Polymerisatdispersionen sind diejenigen bevorzugt, bei denen die Polymerisationsstufe 1 diejenige Monomerenzusammensetzung betrifft, der der tiefere Grenzwert $Tg^i$ zuzuordnen ist, d.h. erfindungsgemäß wird die Stufenabfolge weich/hart bevorzugt.

Zum Aufbau der Monomerenzusammensetzungen 1 und 2 kommen insbesondere monoethylenisch ungesättigte radikalisch polymerisierbare Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-nbutyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl-, -n-butyl-, -iso-butyl-, tert.-butyl-, norbornyl-, isobornyl- und -2-ethylhexylester, Maleinsäuredimethylester oder Maleinsäure-n-butylester, Nitrile α,β-monoethylenisch ungesättigter Carbonsäuren wie Acrylnitril und Methacrylnitril sowie $C_{4-8}$-konjugierte Diene wie 1,3-Butadien und Isopren in Betracht. Von Bedeutung sind auch im Handel befindliche Monomere VEOVA® 9-11 (VEOVA X ist ein Handelsname

der Firma Shell und steht für Vinylester (von Carbonsäuren, die auch als Versatic® X-Säuren bezeichnet werden) der allgemeinen Formel

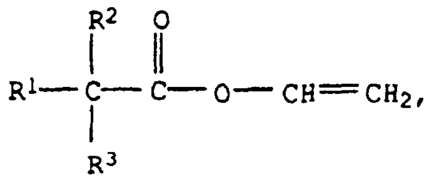

wobei $R^1$, $R^2$ und $R^3$ für Alkylreste stehen, deren Gesamtzahl an Kohlenstoffatomen ($R^1$+$R^2$+$R^3$) gleich X abzüglich 2 ist).

Aus den vorgenannten Monomeren rekrutiert sich in der Regel der Hauptanteil der Monomerenzusammensetzungen 1 und 2, der, bezogen auf die jeweilige Monomerenzusammensetzung, einen Anteil von mehr als 50 Gew.-% auf sich vereint. Monomere, die für sich polymerisiert üblicherweise Homopolymerisate ergeben, die eine erhöhte Wasserlöslichkeit aufweisen, sind in beiden Monomerenzusammensetzungen im Normalfall lediglich in modifizierenden Mengen enthalten. Bezogen auf die Gesamtmenge der jeweiligen Monomerenzusammensetzung sind das normalerweise weniger als 50 Gew.-%, in der Regel weniger als 20 Gew.-%, vorzugsweise 0,1 bis 10 Gew.-%, häufig auch 0,1 bis 5 Gew.-%. Beispiele für derartige Monomere sind 3 bis 6 C-Atome aufweisende $\alpha$,$\beta$-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure, Acrylamidopropansulfonsäure und wasserlösliche Salze der vorgenannten Säuren.

Vorzugsweise enthält sowohl die Monomerenzusammensetzung 1 als auch die Monomerenzusammensetzung 2 0,1 bis 5 Gew.-%, bezogen auf die jeweilige Monomerenzusammensetzung i, an den vorgenannten modifizierenden Monomeren, deren Homopolymerisate eine erhöhte Wasserlöslichkeit aufweisen.

Neben den bereits aufgeführten Monomeren können die Monomerenzusammensetzungen 1 und 2 in untergeordneten Mengen, in der Regel 0,01 bis 5 Gew.-%, bezogen auf die jeweilige Monomerenzusammensetzung i, an solchen Monomeren umfassen, die innerhalb der individuellen dispergierten Polymerisatpartikel eine Vernetzung der Polymerketten bewirken. Besonders geeignet sind diesbezüglich zwei oder mehr nicht konjugierte ethylenisch ungesättigte Gruppen aufweisende Monomere wie z.B. die Di-Ester zweiwertiger Alkohole mit $\alpha$,$\beta$-monoethylenisch ungesättigten Monocarbonsäuren, unter denen wiederum die Acryl- und Methacrylsäureester vorzugsweise eingesetzt werden. Beispielhaft aufgeführt seien Alkylenglykoldiacrylate- und dimethyacrylate wie Ethylenglykoldiacrylat, 1,3-Butylenglykoldiacrylat, 1,4-Butylenglykoldiacrylat sowie Propylenglykoldiacrylat. Ferner eignen sich Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. Selbstverständlich können sowohl die Monomerenzusammensetzung 1 und die Monomerenzusammensetzung 2 gleichzeitig solche vorvernetzenden Monomeren umfassen. Manchmal ist es aber auch günstig, wenn nur eine der beiden Monomerenzusammensetzungen solche Vorvernetzer enthält. Häufig sind sie nur Bestandteil der ersten oder der zweiten Polymerisiationsstufe. Zweckmäßig ist insbesondere ihre ausschließliche Verwendung in der harten Polymerisationsstufe. Sie können aber auch nur in der weichen Polymerisationsstufe befindlich angewendet werden.

Vielfach ist es günstig, wenn wenigstens eine der beiden Monomerenzusammensetzungen 1, 2 oder auch beide in untergeordneten Mengen, üblicherweise 0,5 bis 5 Gew.-%, bezogen auf die jeweilige Monomerenzusammensetzung i, solche Monomeren umfassen, die erst während der Filmbildung eine Vernetzung bedingen.

Beispielhaft genannt seien Carbonylgruppen aufweisende Monomere wie Acrolein, Methacrolein, Diacetonacrylamid und -methacrylamid sowie Acetessigsäurevinylester. Vorgenannte Monomere bewirken z.B. dann eine Nachvernetzung, wenn die wäßrige Polymerisatdispersion gleichzeitig eine entsprechende Menge einer Polyaminverbindung zugesetzt enthält. Als solche eignen sich insbesondere die Dihydrazide von 2 bis 10 C-Atome aufweisenden aliphatischen Dicarbonsäuren. Beispiele hierfür sind Oxalsäuredihydrazid, Malonsäuredihydrazid, Bernsteinsäuredihydrazid, Glutarsäuredihydrazid, Adipinsäuredihydrazid oder Sebacinsäuredihydrazid.

Ein anderes Nachvernetzung bedingendes Monomer ist z.B. 2-Acetoacetoxyethylmethacrylat (alleine bzw. in Kombination mit Polyaminen oder Polyaldehyden wie Glyoxal).

Des weiteren eignen sich zur Nachvernetzung solche Polymerisatbausteine, die hydrolysierbare Si-organische Bindungen aufweisen. Beispielhaft genannt seien die copolymerisierbaren Monomeren Methacryloxypropyltrimethoxysilan und Vinyltrimethoxysilan. Weitere geeignete Polymerbausteine entsprechender Art finden sich in der DE-A 43 41 260. Weisen die dispergierten Polymerisatpartikel Carboxylgruppen auf, läßt sich eine Nachvernetzung auch durch Zusatz von mehrwertigen Kationen aufweisenden Metallsalze bewirken (z.B. Mg-, Ca-, Zn- oder Zr-Salze).

Auch eignen sich Epoxy-, Hydroxy- und/oder N-Alkylolgruppen aufweisende Monomere wie z.B. Glycidylacrylat, N-Methylolacrylamid und -methacrylamid und Monoester aus zweiwertigen Alkoholen und 3 bis 6 C-Atome aufweisenden α,β-monoethylenisch ungesättigten Carbonsäuren wie Hydroxyethyl-, n-Hydroxypropyl- oder n-Hydroxybutylacrylat und -methacrylat zum Zweck der Nachvernetzung.

Umfassen die erfindungsgemäßen wäßrigen Polymerisatdispersionen Vorvernetzung- und/oder Nachvernetzung bewirkende Systeme, so sind mit den den Monomerenzusammensetzungen 1 und 2 definitionsgemäß zuzuordnenden Glasübergangstemperaturen $Tg^1$ und $Tg^2$ die unter Ausschluß dieser lediglich in untergeordneten Mengen enthaltenen Vernetzungsbestandteile zu ermittelnden Glasübergangstemperaturen gemeint. In der Regel wirken sich Vor- und/oder Nachvernetzung vorteilhaft auf die Anfangs- (unmittelbar nach Verfilmung) und Endblocktemperatur (nach mehreren Tagen) aus.

Vorzugsweise rekrutieren sich die Monomerenzusammensetzungen 1 und 2 in der vorstehend beschriebenen Weise ausschließlich aus den nachfolgenden Monomeren:

> n-Butylacrylat, 2-Ethylhexylacrylat, Ethylacrylat, Methylmethacrylat, n-Butylmethacrylat, Styrol, Acrylnitril, Acrylsäure, Methacrylsäure, Acrylamid, Methacrylamid, n-Hydroxyethylacrylat, n-Hydroxyethylmethacrylat, n-Hydroxypropylacrylat, n-Hydroxypropylmethacrylat, Acrylamidopropansulfonsäure sowie Vinylsulfonsäure und deren Alkalimetallsalze.

Besonders bevorzugt rekrutieren sich die Monomerenzusammensetzungen 1 und 2 in der vorstehend beschriebenen Weise ausschließlich aus den nachfolgenden Monomeren:

> n-Butylacrylat, 2-Ethylhexylacrylat, Methylmethacrylat, n-Butylmethacrylat, Acrylsäure, Methacrylsäure, Acrylamid und Methacrylamid.

Insgesamt erweist es sich als günstig, wenn einerseits die Monomerenzusammensetzung i mit dem tieferen $Tg^i$-Wert, bezogen auf die Monomerenzusammensetzung i, 10 bis 50 Gew.-% an solchen Monomeren umfaßt, deren Homopolymerisate Tg-Werte oberhalb des tieferen $Tg^i$ aufweisen und andererseits die Monomerenzusammensetzung i mit dem höheren $Tg^i$-Wert in gleicher Weise bezogen gleichzeitig 0 bis 25 Gew.-% an solchen Monomeren umfaßt, deren Homopolymerisate Tg-Werte unterhalb des höheren $Tg^i$ aufweisen. Generell sind solche erfindungsgemäßen wäßrigen Polymerisatdispersionen von Vorteil, deren MFT ohne Zusatz von Filmbildehilfsmittel ≤ 30°C, vorzugsweise ≤ 10°C, beträgt.

Die Haftmonomere sind ausgewählt aus der Gruppe Aminoethylacrylat und -methacrylat, Dimethylaminoethylacrylat und -methacrylat, Diethylaminoethylacrylat und -methacrylat, Dimethylaminopropylacrylat und -methacrylat, 3-Dimethylamino-2,2-dimethylpropyl-1-acrylat und -methacrylat, 2-N-Morpholinoethylacrylat und -methacrylat, 2-N-Piperidinoethylacrylat und -methacrylat, N-(3-Dimethylaminopropyl)acrylamid und -methacrylamid, N-Dimethylaminoethylacrylamid und -methacrylamid, N-Diethylaminoethylacrylamid und -methacrylamid, N-(4-Morpholinomethyl) acrylamid und -methacrylamid, Vinylimidazol, N-(2-Acryloyloxyethyl)-ethylenharnstoff, N-(β-Acrylamidoethyl)-ethylenharnstoff, N-2-(Allylcarbamato)aminoethylimidazolidinon, N-(3-allyloxy-2-hydroxypropyl) aminoethylethylenharnstoff, N-Vinylethylenharnstoff, N-Vinyloxyethylethylenharnstoff, N-Methacryloxyacetoxyethylethylenharnstoff, N-(Acrylamidomethylen)ethylenharnstoff, N-(Methacrylamidomethylen)ethylenharnstoff N-(2-Methacryloyloxyethyl)ethylenharnstoff und N-(Methacrylamidoethyl)ethylenharnstoff.

Vorzugsweise werden 30 bis 100 mol-%, oder 40 bis 100 mol-% beziehungsweise 50 bis 100 mol-% der definitionsgemäß einzupolymerisierenden, das Element Stickstoff enthaltenden, Haftmonomeren in der Polymerisationsstufe 1 einpolymerisiert. Hinsichtlich einer optimalen Balance aller gewünschten Eigenschaften besonders vorteilhafte erfindungsgemäße wäßrige Polymerisatdispersionen werden dann erhalten, wenn in der Polymerisationsstufe 1 40 bis 60 mol-% der definitionsgemäß ingesamt einzupolymerisierenden Haftmonomeren copolymerisiert werden.

Vorzugsweise werden die erfindungsgemäßen wäßrigen Polymerisatdispersionen mit einem Feststoffgehalt ≥ 40, mit Vorteil ≥ 50 Vol.-%, bezogen auf die gesamte wäßrige Polymerisatdispersion, hergestellt. Regelmäßig wird der Feststoffgehalt anwendungstechnisch zweckmäßig 40 bis 70 Vol.-% betragen.

Hinsichtlich der gewünschten anwendungstechnischen Eigenschaften ist es günstig, wenn der gewichtsmittlere Durchmesser der dispergierten Polymerisatteilchen im Bereich von 40 bis 300 nm liegt. Besonders günstige gewichtsmittlere Polymerisatteilchendurchmesser betragen 50 bis 150 nm bzw. 50 bis 100 nm. Spielt die dynamische Viskosität der erfindungsgemäßen wäßrigen Polymerisatdispersion nicht die entscheidungswesentliche Rolle, ist die Verteilung der Polymerisatteilchendurchmesser vorzugsweise eng. Die Uneinheitlichkeit der Polymerisatteilchendurchmesserverteilung sollte unter 5, bevorzugt unter 2 liegen. Sie ergibt sich als Verhältnis von gewichtsmittlerem zu zahlenmittlerem Polymerisatteilchendurchmesser.

Die Herstellung der erfindungsgemäßen wäßrigen Polymerisatdispersionen erfolgt gemäß der eingangs gegebenen "product by process" Definition des erfindungsgemäßen Gegenstandes. D.h. nach der Methode der radikalischen wäßrigen Emulsionspolymerisation im Beisein von Dispergiermitteln und radikalischen Polymerisationsinitiatoren.

Das Verhältnis der Wasserphase zur Gesamtmenge der in beiden Stufen verwendeten Monomeren wird dabei entsprechend dem gewünschten Feststoffgehalt der herzustellenden wäßrigen Polymerisatdispersion gewählt.

Die Monomerenzusammensetzung 1 kann dabei als ein derselben entsprechendes Monomerengemisch in Form einer wäßrigen Monomerenemulsion insgesamt ins Polymerisationsgefäß vorgelegt oder diesem teilweise oder ganz im Verlauf der Polymerisationsstufe 1 in in wäßrigem Medium emulgierter oder in wasserfreier Form zudosiert werden. Natürlich kann die Monomerenzusammensetzung 1 auch nur bei integraler Betrachtung über die gesamte Polymerisationsstufe 1 realisiert werden. In diesem Fall wird dem Polymerisationsgefaß eine sich in ihrer Zusammensetzung zeitlich ändernde Monomerenmischung zugegeben, deren Zusammensetzung lediglich bei integraler Betrachtung der Monomerenzusammensetzung 1 entspricht. Diese letztere Verfahrensweise ist weniger bevorzugt. Nach Beendigung der Polymerisationsstufe 1 kann die Monomerenzusammensetzung 2 in entsprechender Weise dem Polymerisationsgefäß auf einmal zugesetzt oder teilweise oder ganz im Verlauf der Polymerisationsstufe 2 in in wäßrigem Medium emulgierter oder in wasserfreier Form zudosiert werden. Die erfindungsgemäß einzupolymerisierenden Haftmonomeren werden vorzugsweise in die übrigen Monomeren bzw. deren Emulsionen eingemischt ins Polymerisationsgefäß gegeben. Vorzugsweise werden somit in beiden Polymerisationsstufen dem Polymerisationsgefäß über die jeweilige Polymerisationsstufe in ihrer Zusammensetzung zeitlich konstante Monomerengemische zugeführt. Letzeres erfolgt mit Vorteil so, daß der Polymerisationsumsatz der bereits ins Polymerisationsgefäß zugeführten Monomeren zu jedem Zeitpunkt nach Beginn der Polymerisation $\geq$ 90 Gew.-%, vorzugsweise $\geq$ 95 Gew.-% und besonders bevorzugt $\geq$ 98 Gew.-% beträgt.

In beiden Stufen wird die Polymerisation durch übliche radikalische Initiatoren ausgelöst. Als solche kommen alle diejenigen in Betracht, die in der Lage sind, eine radikalische wäßrige Emulsionspolymerisation auszulösen. Es kann sich dabei sowohl um Peroxide, z.B. um Alkalimetall- bzw. Ammoniumperoxodisulfat, als auch um Azoverbindungen wie Azo-bis-isobutyronitril oder 4,4'-Azo-bis-cyanvaleriansäure handeln. Mit Vorteil werden auch kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit oder Natriumhydrogensulfit und anstelle von Wasserstoffperoxid häufig Alkalimetallperoxodisulfate und/oder Ammoniumperoxodisulfat angewendet werden. Anstelle eines wasserlöslichen Eisen(II)-salzes wird häufig auch ein V-Salz oder eine Kombination aus wasserlöslichen Fe/V-Salzen benutzt. Vorzugsweise beträgt die Menge der eingesetzten radikalischen Initiatorsysteme, bezogen auf die Gesamtmenge der zu polymerisierenden Monomeren, 0,1 bis 2 Gew.-%. Die Polymerisationsinitiatoren können in dem Fachmann an sich bekannter Weise in Abhängigkeit von ihrer Art auf einmal ins Polymerisationsgefäß vorgelegt oder diesem nach Maßgabe ihres Verbrauchs, d.h. gemäß Polymerisationsfortschritt, kontinuierlich zugegeben werden.

Polymerisationsdruck und Polymerisationstemperatur sind von eher untergeordneter Bedeutung. Im allgemeinen arbeitet man in beiden Polymerisationsstufen bei Temperaturen zwischen Raumtemperatur und 100°C, vorzugsweise 50 bis 95°C und besonders bevorzugt 60 bis 90°C. Die Anwendung von vermindertem oder erhöhtem Druck ist möglich, so daß die Polymerisationstemperatur auch 100°C überschreiten und bis zu 130°C und mehr betragen kann. Vorzugsweise werden leichtflüchtige Monomere wie Ethylen oder Butadien unter erhöhtem Druck polymerisiert. Zur pH-Wert Regulierung des Polymerisationsmediums werden während der erfindungsgemäßen radikalischen wäßrigen Emulsionspolymerisation vorzugsweise pH-Puffer wie $NaHCO_3$, $Na_2CO_3$, Na-Acetat oder $Na_2P_2O_5$ zugesetzt. Mit Vorteil werden die pH-Puffer in die zuzuführenden wäßrigen Monomerenemulsionen eingearbeitet. Vorzugsweise wird auf pH 3 bis 6 gepuffert. Diese Maßnahme bedingt erhöhte Koagulat- und Stippen-(Mikrokoagulat)-freiheit der erfindungsgemäßen wäßrigen Polymerisatdispersionen. Alternativ zum Einsatz von Puffern kann die zuzuführende wäßrige Monomerenemulsion auch mittels einer starken Base (z.B. NaOH) auf pH 3 bis 6 teilneutralisiert zugeführt werden. Der gebrauchsfertige End-pH-Wert der erfindungsgemäßen wäßrigen Polymerisatdispersionen wird in der Regel durch Zusatz von Basen wie Ammoniak, Alkalihydroxid (NaOH, KOH), Alkalioxid, Erdalkalioxid, Erdalkalihydroxid ($Ca(OH)_2$), ZnO, Metallcarbonate, -hydrogencarbonate oder Amine wie 2-Amino-2-methyl-1-propanol, Ethanolamin, Diethanolamin, Triethylamin, Morpholin, N,N-Dimethylethanolamin oder 2-Dimethylamino-2-methyl-l-propanol auf Werte oberhalb von 7, vorzugsweise bis 9, erhöht.

Zur Verbesserung der Reproduzierbarkeit und Einstellung definierter Teilchendurchmesser werden Polymerisatteilchenbildungsphase und Polymerisatteilchenwachstumsphase zweckmäßig dadurch in dem Fachmann an sich bekannter Weise voneinander entkoppelt, daß man ins Polymerisationsgefäß eine definierte Menge einer vorgebildeten wäßrigen Polymerisatdispersion (einen Saatlatex) vorlegt oder in selbigem eine solche in situ vorbildet. Die im weiteren Verlauf der radikalischen wäßrigen Emulsionspolymerisation zugesetzte Menge an Dispergiermittel wird dabei in der Regel so bemessen, daß die kritische Micellbildungskonzentration nicht mehr überschritten und so eine Polymerisatteilchenneubildung vermieden wird. Wird eine breite Teilchendurchmesserverteilung zur Erzeugung hochkonzentrierter wäßriger erfindungsgemäßer Polymeriatdispersionen angestrebt, wird man in der Regel dem Polymerisationsgefaß in an sich bekannter Weise zusätzlich während der radikalischen wäßrigen Emulsionspolymerisation Saatlatex zufügen. Selbstverständlich kann man im Rahmen der erfindungsgemäßen radikalischen wäßrigen Emulsionspolymerisation auch das Molekulargewicht regelnde Mittel wie z.B. Mercaptane mitverwenden. Dies erleichtert in der Regel die Filmbildung (niedere MFT) und begünstigt dadurch das Glanzniveau. Häufig erfolgt die Polymerisation jedoch in Abwesenheit derselben. Wie die Verfahren der radikalischen Polymerisation generell, ist das erfindungsgemäße Verfahren dem Fachmann in bekannter Weise sowohl unter Inertgasatmosphäre (z.B. $N_2$, Ar) als auch unter Sauerstoff enthaltender Atmosphäre (z.B. Luft) anwendbar.

Als Dispergiermittel, die insbesondere die Stabilität der erfindungsgemäßen wäßrigen Polymerisatdispersion gewährleisten, kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 2000, vorzugsweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebrauchliche Emulgatoren sind z.B. ethoxylierte Mono-, Di- und Tri-Alkylphenole (EO-Grad: 3 bis 100, Alkylrest: $C_4$ bis $C_{12}$), ethoxylierte Fettalkohole (EO-Grad: 3 bis 100, vorzugsweise 6 bis 50, Alkylrest: $C_6$ bis $C_{20}$), sowie Alkali- und Ammoniumsalze von Alkylsulfaten (Alkylrest: $C_8$ bis $C_{18}$), von Schwefelsäurehalbestern ethoxylierter Alkanole (EO-Grad: 1 bis 70, insbesondere 2 bis 10, Alkylrest: $C_{10}$ bis $C_{18}$) und ethoxylierter Alkylphenole (EO-Grad: 3 bis 100, vorzugsweise 6 bis 50, Alkylrest: $C_4$ bis $C_{18}$), von Alkylsulfonsäuren (Alkylrest: $C_{10}$ bis $C_{18}$) und von Alkylarylsulfonsäuren (Alkylrest: $C_9$ bis $C_{18}$). Weitere geeignete Emulgatoren wie Sulfobernsteinsaureester finden sich in Houben-Weyl, Methoden der organischen Chemie, Band XIV/1, Makromolekulare Stoffe, Georg-Thieme Verlag, Stuttgart, 1961, Seiten 192 bis 208.

Als geeignete grenzflächenaktive Substanzen haben sich ferner Verbindungen der allgemeinen Formel I

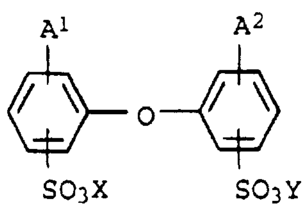

(I),

worin $A^1$ und $A^2$ Wasserstoff oder $C_4$- bis $C_{24}$-Alkyl bedeuten und nicht gleichzeitig Wasserstoff sind, und X und Y Alkalimetallionen und/oder Ammoniumionen sein können, erwiesen. In der Formel I bedeuten $A^1$ und $A^2$ bevorzugt lineare oder verzweigte Alkylreste mit 6 bis 18 C-Atomen oder Wasserstoff, und insbesondere mit 6,12 und 16 C-Atomen, wobei $A^1$ und $A^2$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, $A^1$ ein verzweigter Alkylrest mit 12 C-Atomen und $A^2$ Wasserstoff oder $A^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Vorzugsweise werden die Verbindungen I im erfindungsgemäßen Verfahren für sich und besonders bevorzugt im Gemisch mit ethoxylierten Fettalkoholen (EO-Grad: 3 bis 50, Alkylrest: $C_8$- bis $C_{36}$) als Dispergiermittel eingesetzt. Die Verbindungen I sind allgemein bekannt, z.B. aus der US-A 4,269,749, und im Handel erhältlich.

In der Regel beträgt die Menge an eingesetztem Dispergiermittel 0,5 bis 6, vorzugsweise 1 bis 5 und besonders bevorzugt 2 bis 4 Gew.-%, bezogen auf die radikalisch zu polymerisierenden Monomeren.

Bemerkenswerterweise läßt sich die innere Festigkeit von Verfilmungen der erfindungsgemäßen wäßrigen Polymerisatdispersionen insbesondere für den Fall, daß das dispergierte Polymerisat aufgrund der Copolymerisation von Haftmonomeren wenigstens eine Gruppierung der allgemeinen Formel II

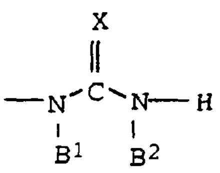

(II),

in der die Variablen bedeuten:

X 0 oder S und

$B^1$, $B^2$ jedes von beiden unabhängig voneinander Wasserstoff oder eine $C_1$- bis $C_5$-Alkylgruppe, oder beide zusammen eine überbrückende $C_2$- bis $C_4$-Alkylengruppe, die bis zu zweifach mit einer $C_1$- bis $C_4$-Alkoxygruppe und/oder Hydroxylgruppe substituiert sein kann,

aufweist, durch das gleichzeitige Beisein wenigstens einer, wenigstens zwei ungeschützte und/oder reversibel geschützte Aldehydgruppen aufweisenden, chemischen Verbindung in der erfindungsgemäßen wäßrigen Polymerisatdispersion erhöhen, wobei das Verhältnis der in der wäßrigen Polymerisatzubereitung insgesamt enthaltenen molaren Menge an Gruppierungen II zur in der wäßrigen Polymerisatdispersion insgesamt enthaltenen molaren Menge an vorgenannten ungeschützten und/oder reversibel geschützten Aldehydgruppen 0,1 bis 10 zu 1 beträgt.

Bemerkenswerterweise sind solche erfindungsgemäßen wäßrigen Polymerisatdispersionen in befriedigender Weise lagerstabil. Ferner ist es bemerkenswert, daß durch die Nachvernetzung die Naßhaftung im wesentlichen nicht beeinträchtigt wird. Außerdem verfügen Verfilmungen solchermaßen nachvernetzter erfindungsgemäßer wäßriger Polymerisatdispersionen über eine erhöhte Wasserfestigkeit und eine reduzierte Neigung zum Weißanlaufen. Vorzugsweise beträgt das vorgenannte molare Verhältnis 1:0,1 bis 2, besonders bevorzugt 1:0,1 bis 1 und ganz besonders bevorzugt 1:0,5 bis 1. Im vorgenannten Sinn besonders bevorzugte Gruppierungen der allgemeinen Formel II sowie besonders günstige aldehydische Verbindungen können der EP-A 609 793 sowie der DE-A 43 34 178 entnommen werden. Mit besonderem Vorteil eignen sich als aldehydische Verbindung Glyoxal und Glutardialdehyd.

Typisches Einsatzgebiet der erfindungsgemäßen wäßrigen Polymerisatdispersionen ist der Bereich wäßriger, insbesondere an organischen Lösungsmittel freien Beschichtungs- und Überzugsmittel, wo sich der aus der wäßrigen Polymerisatdispersion gebildete Film mit dem Substrat haftend verbindet.

Diesem Bereich zuzuordnen sind insbesondere Anstrichfarben für Innen- und Außenanwendungen im Bauwesen.

Ebenso sind industrielle Überzugsmittel zu nennen, insbesondere soweit bei ihrer Anwendung erhöhte Temperaturen nicht oder nur schwer zu verwirklichen sind. Beispiele solcher Überzüge sind Schlußlacke, Haftgrundierungen, Isolierungen und heißsiegelbare Klebschichten. Weiterhin sind die erfindungsgemäßen wäßrigen Polymerisatdispersionen zum Verfestigen von flächigen Fasergebilden geeignet. Während für die zuletzt genannten Anwendungen Filme der reinen Kunststoffdispersionen geeignet sind, werden sie für den Beschichtungs- und Anstrichsektor in der Regel pigmentiert und/oder mit Füllstoffen versetzt. Hier können gängige Rezepturen und Formulierungen angewendet werden, wobei stets die Vorteile von tiefer MFT, hoher BT, erhöhtem Glanz und erhöhter Reißdehnung zur Geltung kommen. Zu nennen sind hier insbesondere Lasuren, Lack-, Seidenglanz-, Glanz- und Hochglanzfarben sowie Massen zum Beschichten von Leder. Als besonders geeignete Substrate seien Holz, Leder, Metall, Kunststoff und mineralische Materialien genannt. Auch eignen sich die erfindungsgemäßen Polymerisate als Additiv in mineralischen Bindemitteln, insbesondere solchen auf Basis Zement.

Vor allem bei Anwendungen im Innenbereich ist es erforderlich, daß die erfindungsgemäßen wäßrigen Polymerisatdispersionen weitgehend frei von Restmonomeren und organischem Lösungsmittel sind.

Dies kann in an sich bekannter Weise z.B. durch destillative Entfernung (insbesondere Wasserdampfdestillation) oder durch Abstreifen mit einem inerten Gas erreicht werden. Selbstverständlich können auch Verfahren der radikalischen Nachpolymerisation angewendet werden (insbesondere unter Einwirkung von Redoxinitiatorsystemen) wie sie z.B. in der DE-A 44 35 423, DE-A 44 19 518 sowie in der DE-A 44 35 422 aufgeführt oder als Stand der Technik zitiert sind.

Die in den erfindungsgemäßen wäßrigen Polymerisatdispersionen dispergierten Polymerisate können z.B. durch behutsame Spruhtrocknung, oder durch Koagulation in an sich bekannter Weise und anschließendes Auswaschen, isoliert werden. Soweit sie nicht aus sich heraus in wäßrigem Medium direkt redispergierbar sind, lösen sie sich in der Regel in organischen Lösungsmitteln. Diese Lösungen können in wäßriges Medium überführt und unter destillativer Entfernung des organischen Lösungsmittels sowie Zusatz an Dispergiermittel in eine stabile disperse Verteilung des Polymerisats im wäßrigen Medium transformiert werden.

Beispiele

A) Herstellung erfindungsgemäßer wäßriger Polymerisatdispersionen D1 bis D6 sowie von Vergleichsdispersionen VD1 bis VD4

In einem Polymerisationsgefäß wurde ein Gemisch aus

| | |
|---|---|
| 200 g | Wasser, |
| 25 g | einer 20 gew.-%igen wäßrigen Lösung von ethoxyliertem Fettalkohol (Alkylrest: $C_{16}$/$C_{18}$-Gemisch, mittlerer EO-Grad: 18) = Emulgatorlösung 2, |
| 60 g | einer 15 gew.-%igen wäßrigen Lösung von Natriumlaurylsulfat = Emulgatorlösung 1, |
| 10 g | Zulauf 1 und |
| 10 g | Zulauf 3 |

vorgelegt und unter Rühren innerhalb von 10 min auf 85°C erhitzt. Nach 10-minütigem Rühren bei 85°C wurde unter Aufrechterhaltung der 85°C die Restmenge an Zulauf 1 dem Polymerisationsgefäß innerhalb von 1,5 h kontinuierlich zudosiert. Zeitgleich beginnend mit der Restmenge an Zulauf 1 wurde innerhalb von 2 h die Restmenge an Zulauf 3 dem Polymerisationsgefäß kontinuierlich zugeführt. Nach Beendigung von Zulauf 1 wurde unter weiterer Aufrechterhaltung der 85°C Zulauf 2 dem Polymerisationsgefäß innerhalb von 30 min kontinuierlich zugeführt. Danach wurde das Polymerisationsgemisch noch 2 h bei 85°C gerührt. Anschließend wurde auf 25°C abgekühlt, 6 ml konzentrierte wäßrige Ammoniaklösung zugegeben und die Dispersion über ein Filter von 250 µm Maschenweite filtriert.

| Zulauf 1: | |
|---|---|
| 90 + X g | Wasser, |
| 250 g | n-Butylacrylat, |
| 125 g | Methylmethacrylat, |
| 6,4 g | Acrylsäure, |
| 4,3 g | 50 gew.-%ige wäßrige Lösung von Acrylamid, |
| 0,5 g | $Na_4P_2O_7$ |
| 2,1 g | Emulgatorlösung 1, |
| 22,5 g | Emulgatorlösung 2 |
| X g | Ureidoethylmethacrylat. |

| Zulauf 2: | |
|---|---|
| 30 + Y g | Wasser, |
| 125 g | Methylmethacrylat, |
| Y g | Ureidoethylmethacrylat, |
| 1,1 g | Acrylsäure, |
| 0,7 g | einer 50 gew.-%igen wäßrigen Acrylamidlösung, |
| 6,7 g | Emulgatorlösung 1 |
| 3,75 g | Emulgatorlösung 2. |

| Zulauf 3: | |
|---|---|
| 2,5 g | Natriumperoxodisulfat gelöst in 100 g Wasser. |

Die nachfolgende Tabelle 1 zeigt die im einzelnen angewendeten Werte für X und Y an, charakterisiert die dabei erhaltenen wäßrigen Polymerisatdispersionen und gibt an mit diesen wäßrigen Polymerisatdispersionen hergestellten Anstrichformulierungen gewonnene anwendungstechnische Eigenschaftsprofile wieder.

Tabelle 1

| Dispersion | X (g) | y (g) | Feststoffgehalt (Gew.-%) | Blockfestigkeit (nach 1 h/nach 24 h) | MFT (°C) | Naßhaftung | Reißdehnung (%) | Glanzwert (Mittelwert/Spitzenwert) |
|---|---|---|---|---|---|---|---|---|
| VD1 | - | - | 49,2 | 0/0 | < 6 | 6 | 519 | 18/18 |
| VD2 | - | 5 | 49,7 | 0,5/0,5 | 8 | 3,5 | 295 | 67/67 |
| VD3 | - | 7,5 | 50,1 | 0/0 | 7 | 3 | 224 | 64/65 |
| VD4 | - | 10 | 49,5 | 0/1 | 8 | 3 | 236 | 61/63 |
| D1 | 5 | - | 50,7 | 0/0 | < 6 | 4 | 478 | 73/73 |
| D2 | 7,5 | - | 50,1 | 0/0,5 | < 6 | 4 | 458 | 73/73 |
| D3 | 10 | - | 49,5 | 0/1 | < 6 | 2 | 434 | 72/72 |
| D4 | 5 | 5 | 49,6 | 0/0 | < 6 | 3 | 310 | 68/69 |
| D5 | 7,5 | 2,5 | 49,8 | 0/0 | < 6 | 2 | 425 | 72/73 |
| D6 | 2,5 | 7,5 | 49,9 | 0/0,5 | 10 | 3,5 | 295 | 69/70 |

Beschreibung der zur Ermittlung der in der Tabelle 1 aufgeführten anwendungstechnischen Eigenschaften angewendeten Prüfmethoden

a) Formulierung einer Holzschutzlasur und Ermittlung der Blockfestigkeit

Aus den wäßrigen Polymerisatdispersionen VD1 bis VD4 und D1 bis D6 wurden wie folgt Holzschutzlasuren formuliert:

| | | |
|---|---|---|
| 100 g | Wasser, | |
| 2 g | 30 gew.-%ige wäßrige Lösung des Ammoniumsalzes einer mittelmolekularen Polyacrylsäure (Pigmentverteiler A der BASF AG), | |
| 50 g | Propylenglykol, | |
| 16 g | Syloid® ED5 (Mattierungsmittel der Fa. Grace GmbH, Worms), | |
| 5 g | Mergal® BCM (Fungizid-Bläueschutz-Kombination der Fa. Riedel-de-Haen AG, Seelze), | |
| 3 g | Agitan® 232 (Entschäumer der Fa. Müzing Chemie GmbH, Heilbronn), | |
| 19 g | Butylglykol, | |
| 5 g | Lusolvan® FBH (Filmbildehilfsmittel der BASF AG), | |
| 700 g | wäßrige Polymerisatdispersion, | |
| 30 g | Wasser, | |
| 65 g | Luconyl® - Gelb und | Pigmentpräparationen der BASF AG. |
| 5 g | Luconyl® - Rot | |

Zur Prüfung der Blockfestigkeit der hergestellten Holzschutzlasuren wurden aus mit 100 µm Naßschichtdicke der Lasuren beschichteten Leneta-Folien (mit Ruß geschwärzte und gesinterte PVC-Folien der Schwegmann GmbH in D-53501 Grafschaft Gelsdorf) nach 24 h Trocknung bei 23°C und 50 % relativer Luftfeuchtigkeit quadratische Probekörper einer Kantenlänge von 2 cm ausgeschnitten und jeweils paarweise mit der beschichteten Seite über einen Zeitraum von 1 h bzw. 24 h mit einer Auflagemasse von 5 kg bei 60°C gegeneinander gepreßt. Anschließend wurden die Probestücke nach Abkühlung auf 23°C wieder voneinander gelöst und die diesbezüglich erforderliche Abziehkraft sowie die dabei resultierende Filmbeschaffenheit nach folgender Werteskala beurteilt:

- 0: Probestücke fallen unter der Einwirkung ihres eigenen Gewichtes auseinander, die Verfilmungen bleiben unverletzt;
- 1: Probestücke lassen sich ohne nennenswerten Kraftaufwand voneinander trennen, die Verfilmungen bleiben unverletzt;
- 2: Zur Trennung der Probestücke ist ein geringer Kraftaufwand erforderlich, die Verfilmungen bleiben unverletzt;
- 3: Zur Trennung der Probestücke ist ein erhöhter Kraftaufwand erforderlich, die Verfilmungen erfahren kleine Löcher und Risse;
- 4: Zur Trennung der Probestücke ist ein großer Kraftaufwand erforderlich, die Verfilmungen erleiden größere Löcher und Risse;
- 5: Die Probestücke lassen sich nur unter sehr starkem Kraftaufwand voneinander trennen und die Verfilmungen erleiden bei der Trennung starke Verletzungen.

b) Bestimmung der Mindestfilmbildetemperatur (MFT)

Die Bestimmung der Mindestfilmbildetemperatur erfolgte an der reinen wäßrigen Polymerisatdispersion in Anlehnung an Ullmanns Encyklopädie der technischen Chemie, Bd. 19, Verlag Chemie, Weinheim (1980), S. 17. Als Meßgerät diente eine Filmbildebank (= Metallplatte, an die ein Temperaturgradient angelegt wird). Die Verfilmung erfolgte in einer Naßschichtdicke von 500 µm. Die MFT ist diejenige Temperatur, bei der der Film begann rissig zu werden.

c) Formulierung einer Seidenglanzfarbe und Bestimmung der Naßhaftung

Aus den wäßrigen Polymerisatdispersionen VD1 bis VD4 und D1 bis D6 wurden wie folgt Seidenglanzfarben formuliert:

| | |
|---|---|
| 89 g | Wasser, |
| 6 g | 25 gew.-%ige wäßrige Lösung des Na-Salzes eines Copolymerisats aus Maleinsäure und Di-Isobutylen (Dispergiermittel für Pigmente und Füllstoffe), |
| 2 g | Parmetol® A23 (Konservierungsmittel), |
| 9 g | Natrosol® 250 HR (4 gew.-%ige wäßrige Verdickerlösung auf Basis Hydroxyethylcellulose), |
| 32 g | Propylenglykol, |
| 10 g | Butyldiglykol, |
| 4 g | Agitan® 702 (Entschäumer), |
| 210 g | Kronos® RHD-2 (feinteiliges $TiO_2$-Pigment), |
| 106 g | Talkum SE Micro (Füllstoff), |
| 10 g | Collacral® PU75 (Polyurethanassoziativverdicker), |
| 13 g | Butyldiglykol, |
| 5 g | Kristallöl® K60 (Kohlenwasserstoffgemisch als Filmbildehilfsmittel) und |
| 504 g | wäßrige Polymerisatdispersion. |

Zur Testung der Naßhaftung der gemäß vorstehend formulierten Seidenglanzfarben auf einem Alkydharz-Anstrich wurde auf Leneta-Folie zunächst eine hochglänzende lösemittelhaltige handelsübliche Alkydharzfarbe in einer Naßschichtdicke von 120 µm aufgetragen und einen Tag bei Raumtemperatur sowie 7 Tage bei 50°C im Umlufttrockenschrank getrocknet. Anschließend wurde auf den Alkydharzfarbengrundanstrich nach Abkühlung auf 23°C die jeweilige Seidenglanzfarbe in einer Naßschichtdicke von 200 µm aufgetragen und 3 Tage bei 23°C/ 65 % relative Luftfeuchtigkeit getrocknet. Danach wurde die Oberfläche durch einen Messerschnitt verletzt und die wie beschrieben präparierten Folien zur Überprüfung der Naßhaftung der Deckschicht auf der Alkydharzgrundschicht mehreren aufeinanderfolgenden Frost-Tau-Wechseln unterworfen. Innerhalb eines Frost-Tau-Wechsel Vorgangs wurden die beschichteten Folien zunächst 8 h in Wasser bei 23°C gelagert, dann 16 h bei -20°C gehalten und anschließend während 10 min bei 23°C in Wasser gestellt. Nach dem fünften Frost-Tau-Wechsel wurde bei 23°C die Haftung der Deckschicht auf der Grundschicht an der Einschnittstelle geprüft und gemäß folgender Werteskala beurteilt:

1 = ausgezeichnet
2 = gut
3 = voll befriedigend
4 = befriedigend
5 = mangelhaft
6 = ungenügend

d) Bestimmung der Reißdehnung (%)

Die Bestimmung der Reißdehnung erfolgte in Anlehnung an die DIN 53455 und die DIN 53504. Die angegebenen Meßwerte sind Mittelwerte aus 5 Messungen an 5 Prüfkörpern.

Zur Herstellung der Prüfkörper wurde jeweils eine Mischung aus

| | |
|---|---|
| 60 g | wäßriger Polymerisatdispersion, |
| 4 g | Butylglykol und |
| 56 g | Wasser |

zubereitet und über einen Zeitraum von 7 Tagen bei 23°C und 50 % relativer Luftfeuchtigkeit Proben in einer Silikonform verfilmt (0,5 mm Trockendicke). Nach dem Ablösen der Verfilmung aus der Silikonpfanne wurden aus selbiger die zur Durchführung des Zugversuchs benötigten Probekörper ausgestanzt.

Als Probenkörperformat wurde das in DIN 53504 (s. 2.4.11.6) als Normstab S2 beschriebene Hantelformat angewendet. Die Dicke der Proben wurde mit dem Dickemeßgerät nach DIN 53370 mit kreisförmiger Tastenform von 10 mm Durchmesser überprüft.

Die Probekörper wurden in die Klammern einer Zugprüfmaschine eingespannt und mit einer Abzugsgeschwindigkeit von 200 mm/min gerissen. Die Reißdehnung ist die Dehnung im Augenblick des Reißens. Sie bezieht sich

auf 23°C. Ihre Angabe erfolgt als $(L-L_o/L_o)x100$ (%), dabei bedeuten

$L_o$: die ursprüngliche Meßlänge,
L: die Meßlänge beim Reißen.

e) Durchführung von Glanzmessungen Auf einer Leneta-Folie (Format: 16cmx8cm) wurden Naßschichtdicken der wäßrigen Polymerisatdispersionen von 200 µm aufgebracht. Nach 24 h Verfilmung bei 23°C und 50 % relativer Luftfeuchtigkeit wurde der Glanzgrad der Verfilmung bei 23°C und 60°-Winkel-Beobachtung mit einem Micro-TRI-Gloss-Reflektometer der Firma BYK-Gardner an 3 aus der Filmfläche willkürlich herausgegriffenen Meßpunkten bestimmt. Angegeben wird der Mittelwert aus den 3 Bestimmungen sowie der Höchstwert. Ein zunehmender Glanzwert wiederspiegelt einen zunehmenden Glanz.

B) Nachvernetzung erfindungsgemäßer wäßriger Polymerisatdispersionen mit Glyoxal

Die Herstellung der erfindungsgemäßen wäßrigen Polymerisatdispersion D7 erfolgte gemäß der in A) gegebenen allgemeinen Herstellvorschrift, wobei Vorlage und Zuläufe nachfolgende Zusammensetzung aufwiesen:

| Vorlage: | |
|---|---|
| 380 g | Wasser, |
| 120 g | Emulgatorlösung 1, |
| 25 g | Emulgatorlosung 2, |
| 20 g | Zulauf 1, |
| 30 g | Zulauf 3. |

| Zulauf 1: | |
|---|---|
| 200 g | Wasser, |
| 420 g | n-Butylacrylat, |
| 330 g | Methylmethacrylat, |
| 10 g | Ureidoethylmethacrylat, |
| 7,5 g | Acrylsäure, |
| 8,5 g | 50 gew.-%ige wäßrige Lösung von Acrylamid, |
| 1 g | $Na_4P_2O_7$ |
| 4,3 g | Emulgatorlösung 1, |
| 37,5 g | Emulgatorlösung 2. |

| Zulauf 2: | |
|---|---|
| 70 g | Wasser, |
| 250 g | Methylmethacrylat, |
| 10 g | Ureidoethylmethacrylat, |
| 7,5 g | Acrylsäure, |
| 1,5 g | 50 gew.-%ige wäßrige Lösung von Acrylamid, |
| 13,3 g | Emulgatorlösung 1, |
| 37,5 g | Emulgatorlösung 2. |

| Zulauf 3: | |
|---|---|
| 200 g | Wasser, |
| 1,5 g | Natriumperoxodisulfat. |

In je 500 ml der resultierenden wäßrigen Polymerisatdispersion D7 wurden Zg einer 40 gew.-%igen wäßrigen Glyoxallösung eingerührt. Die dabei erhaltenen wäßrigen Polymerisatdispersionen wurden wie folgt auf Wasseraufnahme und Weißanlaufbeständigkeit geprüft:

a) Bestimmung der Wasseraufnahme (WA)

Aus den Glyoxal enthaltenden wäßrigen Polymerisatdispersionen wurden nach Verdünnung mit Wasser auf einen Feststoffgehalt von 25 Gew.-% ca. 500 µm dicke Polymerfilme hergestellt, indem man in einer Silikonpfanne eine definierte Menge wäßriger Polymerisatdispersion über einen Zeitraum von 5 Tagen bei 23°C und 50 % relativer Luftfeuchtigkeit verfilmte.

Anschließend wurden die Polymerfilme der Silikonpfanne entnommen und flächige quadratische (ca. 4 $cm^2$) Filmstücke ausgestanzt. Diese wurden während 24 h bei 23°C in 100 ml vollentsalztes Wasser gelegt.

Die Wasseraufnahme der Probenstucke wurde gravimetrisch ermittelt. Ihre Angabe erfolgt in Tabelle 2 in Gew.-%, bezogen auf das Ausgangsgewicht des Probekorpers.

b) Bestimmung der Weißanlaufbeständigkeit (WB)

Die Glyoxal enthaltenden wäßrigen Polymerisatzubereitungen wurden in einer Naßschichtdicke von 200 µm auf eine Glasplatte aufgerakelt und über einen Zeitraum von 24 h bei 23°C und 50 % relativer Luftfeuchtigkeit verfilmt. Die so beschichteten Glasplatten wurden bei 23°C während 4 h senkrecht in einen mit voll entsalztem Wasser gefüllten Trog gestellt. Anschließend wurden die Platten aus dem Trog entfernt und die Filme auf Weißanlaufen und Blasenbildung visuell geprüft.

Die erhaltenen Ergebnisse zeigt Tabelle 2.

Tabelle 2

| Menge D7 | Z | Molverhältnis Ureid-/Aldehydgruppe | WA (Gew.-%) | WB |
|---|---|---|---|---|
| 500 ml | - | - | 28,2 | viele kleine Blasen, sehr starke Trübung |
| 500 ml | 0,43 | 1:0,25 | 22,3 | viele kleine Blasen, starke Trübung |
| 500 ml | 0,86 | 1:0,5 | 20,1 | keine Blasenbildung, schwache Trübung |
| 500 ml | 1,72 | 1:1 | 18,9 | keine Blasenbildung, keine Trübung (klarer Film) |

C) Herstellung weiterer erfindungsgemäßer wäßriger Polymerisatdispersionen und Bestimmung anwendungstechnischer Eigenschaften

Die Herstellung erfolgte in allen Fällen gemäß der allgemeinen Herstellvorschrift in A. Bei den Dispersionen D15 und D16 betrug die Gesamtzulaufzeit (= Zulaufzeit von Zulauf 1 + Zulaufzeit von Zulauf 2) ebenfalls 2h, die Zulaufzeiten der Zuläufe 1 und 2 wurden jedoch so gewählt, daß ihr Verhältnis dem Gewichtsverhältnis der in den Zuläufen 1 und 2 enthaltenen jeweiligen Monomerengesamtmenge entsprach.
Ebenso erfolgten die anwendungstechnischen Bestimmungen wie in A) beschrieben. Die Zusammensetzung der Vorlage sowie der Zuläufe und die anwendungstechnischen Eigenschaften weist Tabelle 3 aus. Dabei wurden nachfolgende Abkürzungen verwendet:

BA = n-Butylacrylat,
MMA = Methylmethacrylat,
UMA = Ureidoethylmethacrylat,
AS = Acrylsäure,
MAS = Methacrylsäure
AM = 50 gew.-%ige wäßrige Acrylamidlösung,
GL = 40 gew.-%ige wäßrige Glyoxallösung,
BDA = 1,4-Butylenglykoldiacrylat,
NAPS = Natriumperoxodisulfat,
DAAM = 50 gew.-%ige wäßrige Diacetonacrylamidlosung,
ADDH = Adipinsäuredihydrazid,

E1 = wäßrige Emulgatorlösung 1,
E2 = wäßrige Emulgatorlösung 2,

Z1 = Zulauf 1,
Z2 = Zulauf 2.

Die Mengenangaben erfolgen jeweils in g.

Tabelle 3

| Vorlage | D8 | D9 | D10 | D11 | D12 | D13 | D14 | D15 | D16 | D17 | D18 | D19 |
|---|---|---|---|---|---|---|---|---|---|---|---|---|
| Wasser | 200 | 200 | 200 | 200 | 200 | 200 | 200 | 200 | 200 | 200 | 200 | 200 |
| E1 | 60 | 60 | 60 | 60 | 60 | 60 | 66,7 | 60 | 60 | 60 | 60 | 60 |
| E2 | 12,5 | 12,5 | 12,5 | 12,5 | 12,5 | 12,5 | - | 12,5 | 12,5 | 12,5 | 25 | 25 |
| Z1 | 10 | 10 | 10 | 10 | 10 | 10 | 10 | 10 | 10 | 10 | 10 | 10 |
| Z2 | 15 | 15 | 15 | 15 | 15 | 15 | 15 | 15 | 15 | 15 | 10 | 10 |
| | | | | | | | | | | | | |
| Zulauf 1 | | | | | | | | | | | | |
| Wasser | 95 | 95 | 95 | 95 | 95 | 95 | 95 | 95 | 80 | 95 | 88 | 85 |
| BA | 250 | 250 | 250 | 250 | 250 | 250 | 250 | 250 | 250 | 250 | 250 | 250 |
| MMA | 125 | 125 | 125 | 125 | 125 | 125 | 125 | 100 | 75 | 125 | 125 | 125 |
| UMA | 5 | 5 | 5 | 5 | 5 | 5 | 5 | 5 | 5 | 5 | 3,8 | 2,5 |
| AS | 6,4 | 3,8 | 3,8 | 3,8 | 3,8 | 3,8 | 3,8 | 3,8 | 3,8 | 5MAS | 6,4 | 6,4 |
| AM | 4,3 | 4,3 | 4,3 | 4,3 | 4,3 | 4,3 | 4,3 | 4,3 | 4,3 | 4,3 | 4,3 | 4,3 |
| E1 | 2,1 | 2,1 | 2,1 | 2,1 | 2,1 | 2,1 | 6,7 | 2,1 | 2,1 | 2,1 | 2,1 | 2,1 |
| E2 | 18,8 | 18,8 | 18,8 | 18,8 | 18,8 | 18,8 | - | 18,8 | 18,8 | 18,8 | 22,5 | 22,5 |
| | | | | 1,5 BDA | 15 g DAAM | | | | | | | |

| Vorlage | D8 | D9 | D10 | D11 | D12 | D13 | D14 | D15 | D16 | D17 | D18 | D19 |
|---|---|---|---|---|---|---|---|---|---|---|---|---|
| Zulauf 2 | | | | | | | | | | | | |
| Wasser | 35 | 35 | 35 | 35 | 35 | 35 | 35 | 35 | 55 | 35 | 40 | 40 |
| MMA | 125 | 125 | 125 | 125 | 125 | 125 | 125 | 150 | 175 | 125 | 125 | 125 |
| UMA | 5 | 5 | 5 | 5 | 5 | 5 | 5 | 5 | 5 | 5 | 3,8 | 2,5 |
| AS | 1,1 | 3,8 | 3,8 | 3,8 | 3,8 | 3,8 | 3,8 | 3,8 | 3,8 | 5MAS | 1,1 | 1,1 |
| AM | 0,8 | 0,8 | 0,8 | 0,8 | 0,8 | 0,8 | 0,8 | 0,8 | 0,8 | 0,8 | 0,8 | 0,8 |
| E1 | 6,7 | 6,7 | 6,7 | 6,7 | 6,7 | 6,7 | 6,7 | 6,7 | 6,7 | 6,7 | 6,7 | 6,7 |
| E2 | 18,8 | 18,8 | 18,8 | 18,8 | 18,8 | 18,8 | - | 18,8 | 18,8 | 18,8 | 18,8 | 18,8 |
| | | | | | | | | | | | | |
| Zulauf 3 | | | | | | | | | | | | |
| Wasser | 100 | 100 | 100 | 100 | 100 | 100 | 100 | 100 | 100 | 100 | 100 | 100 |
| NaPS | 1,5 | 1,5 | 1,5 | 1,5 | 1,5 | 0,8 | 1,5 | 1,5 | 1,5 | 1,5 | 2,5 | 2,5 |

| Vorlage | D8 | D9 | D10 | D11 | D12 | D13 | D14 | D15 | D16 | D17 | D18 | D19 |
|---|---|---|---|---|---|---|---|---|---|---|---|---|
| MFT (°C) | < 6 | < 6 | 7 | < 6 | 5 | < 6 | 11 | < 6 | < 6 | < 6 | < 6 | < 6 |
| Glanzwert (M/S) | 73/74 | 70/72 | 70/70 | 72/72 | 71/71 | 61/62 | 70/71 | 67/70 | 64/70 | - | 71/73 | 73/74 |
| Reißdehnung (%) | 312 | 268 | 278 | 236 | 189 | 246 | 186 | 232 | 216 | 221 | 378 | 408 |
| Block-festigkeit | | | | | | | | | | | | |
| 1 h | 0 | 0 | 0 | 0 | 0 | 0 | 0 | 1 | 1 | 0 | 0 | 0 |
| 24 h | 0 | 0 | 0 | 0 | 0 | 0 | 0 | 1 | 0,5 | 0 | 0 | 0 |
| Naßhaftung | 1 | 2 | 4 | 3 | 4 | 3 | 1 | 4 | 4 | 3 | 3 | 4 |

Bei Beispiel D10 wurden nach beendeter Polymerisation und Neutralisation, jedoch vor der Filtration, 3,6 g GL zugesetzt. In Beispiel 12 wurden in entsprechender Weise 3,8 g ADDH gelöst in 15 g Wasser zugesetzt.

## Patentansprüche

1. Wäßrige Polymerisatdispersion, dadurch erhältlich, daß man eine Zusammensetzung 1 von wenigstens eine ethylenisch ungesättigte Gruppe aufweisenden Verbindungen (Monomeren) nach der Methode der radikalischen wäßrigen Emulsionspolymerisation bis zu einem Umsatz von wenigstens 90 Gew.-%, bezogen auf die zu polymerisierende Monomerenzusammensetzung 1, polymerisiert (Polymerisationsstufe 1) und daran anschließend im Beisein des Produktgemisches der Polymerisationsstufe 1 eine Zusammensetzung 2 von wenigstens eine ethylenisch ungesättigte Gruppe aufweisenden Verbindungen (Monomeren) nach der Methode der radikalischen wäßrigen Emulsionspolymerisation mit der Maßgabe polymerisiert (Polymerisationsstufe 2), daß

   a) die Zusammensetzung 1 so beschaffen ist, daß bei alleiniger statistischer Copolymerisation der Zusammensetzung 1 ein Polymerisat 1 erhalten würde, dessen Glasübergangstemperatur mit zunehmendem Molekulargewicht dem Grenzwert $Tg^1$ zustrebt,

   b) die Zusammensetzung 2 so beschaffen ist, daß bei alleiniger statistischer Copolymerisation der Zusammensetzung 2 ein Polymerisat 2 erhalten würde, dessen Glasübergangstemperatur mit zunehmendem Molekulargewicht dem Grenzwert $Tg^2$ zustrebt,

   c) der Differenzbetrag zwischen $Tg^1$ und $Tg^2$ wenigstens 30°C beträgt,

   d) zusätzlich zu den Monomeren der Zusammensetzungen 1 und 2 wenigstens ein von diesen Monomeren verschiedenes (Haftmonomer), ausgewählt aus einer Gruppe umfassend Aminoethylacrylat und -methacrylat, Dimethylaminoethylacrylat und -methacrylat, Diethylaminoethylacrylat und -methacrylat, Dimethylaminopropylacrylat und -methacrylat, 3-Dimethylamino-2,2-dimethylpropyl-1-acrylat und -methacrylat, 2-N-Morpholinoethylacrylat und -methacrylat, 2-N-Piperidinoethylacrylat und -methacrylat, N-(3-Dimethylaminopropyl)acrylamid und -methacrylamid, N-Dimethylaminoethylacrylamid und -methacrylamid, N-Diethylaminoethylacrylamid und -methacrylamid, N-(4-Morpholinomethyl)acrylamid und -methacrylamid, Vinylimidazol, N-(2-Acryloyloxyethyl)-ethylenharnstoff, N-(β-Acrylamidoethyl)-ethylenharnstoff, N-2-(Allylcarbamato)aminoethylimidazolidinon, N-(3-allyloxy-2-hydroxypropyl)aminoethylethylenharnstoff, N-Vinylethylenharnstoff, N-Vinyloxyethylethylenharnstoff, N-Methacryloxyacetoxyethylethylenharnstoff, N-(Acrylamidomethylen)-ethylenharnstoff, N-(Methacrylamidomethylen)ethylenharnstoff, N-(2-Methacryloyloxyethyl)ethylenharnstoff und N-(Methacrylamidoethyl)ethylenharnstoff, in einer Menge von 0,1 bis 10 Gew.-%, bezogen auf die Gesamtmenge der zu polymerisierenden Monomeren, einpolymerisiert wird,

   e) von der Gesamtmenge der gemäß d) einzupolymerisierenden Haftmonomeren 20 bis 100 mol-% in der Polymerisationsstufe 1 einpolymerisiert werden und

   f) die Menge derjenigen Zusammensetzung i, der der tiefere Grenzwert $Tg^i$ zuzuordnen ist, bezogen auf die Gesamtmenge der Zusammensetzungen 1 und 2, 40 bis 90 Gew.-% beträgt.

2. Wäßrige Polymerisatdispersion nach Anspruch 1, wobei der Polymerisationsumsatz in der ersten Polymerisationsstufe, bezogen auf die zu polymerisierende Monomerenzusammensetzung 1, wenigstens 95 Gew.-% beträgt.

3. Wäßrige Polymerisatdispersion nach Anspruch 1, wobei der Polymerisationsumsatz in der ersten Polymerisationsstufe, bezogen auf die zu polymerisierende Monomerenzusammensetzung 1, wenigstens 98 Gew.-% beträgt.

4. Wäßrige Polymerisatdispersion nach Anspruch 1 bis 3, wobei die Menge derjenigen Monomerenzusammensetzung i, der der tiefere Grenzwert $Tg^i$ zuzuordnen ist, bezogen auf die Gesamtmenge der Zusammensetzungen 1 und 2, 60 bis 80 Gew.-% beträgt.

5. Wäßrige Polymerisatdispersion nach Anspruch 1 bis 3, wobei die Menge derjenigen Monomerenzusammensetzung i, der der tiefere Grenzwert $Tg^i$ zuzuordnen ist, bezogen auf die Gesamtmenge der Zusammensetzungen 1 und 2, 70 bis 80 Gew.-% beträgt.

6. Wäßrige Polymerisatdispersion nach Anspruch 1 bis 5, wobei der Differenzbetrag zwischen $Tg^1$ und $Tg^2$ 60 bis 120°C beträgt.

7. Wäßrige Polymerisatdispersion nach Anspruch 1 bis 6, wobei der tiefere der beiden Grenzwerte $Tg^i$ -60 bis +35°C

beträgt.

8. Wäßrige Polymerisatdispersion nach Anspruch 1 bis 6, wobei der tiefere der beiden Grenzwerte $Tg^i$ -30 bis +35°C beträgt.

9. Wäßrige Polymerisatdispersion nach Anspruch 1 bis 6, wobei der tiefere der beiden Grenzwerte $Tg^i$ -20 bis +20°C beträgt.

10. Wäßrige Polymerisatdispersion nach Anspruch 1 bis 9, wobei der höhere der beiden Grenzwerte $Tg^i$ > 50 bis 130°C beträgt.

11. Wäßrige Polymerisatdispersion nach Anspruch 1 bis 9, wobei der höhere der beiden Grenzwerte $Tg^i$ 60 bis 120°C beträgt.

12. Wäßrige Polymerisatdispersion nach Anspruch 1 bis 9, wobei der höhere der beiden Grenzwerte $Tg^i$ 95 bis 115°C beträgt.

13. Wäßrige Polymerisatdispersion nach Anspruch 1 bis 12, wobei die Polymerisationsstufe 1 diejenige Monomerenzusammensetzung betrifft, der der tiefere Grenzwert $Tg^i$ zuzuordnen ist.

14. Wäßrige Polymerisatdispersion nach Anspruch 1 bis 13, wobei sich die Monomerenzusammensetzungen 1 und 2 ausschließlich aus Monomeren der Gruppe umfassend n-Butylacrylat, 2-Ethylhexylacrylat, Ethylacrylat, Methylmethacrylat, n-Butylmethacrylat, Styrol, Acrylnitril, Acrylsäure, Methacrylsäure, Acrylamid, Methacrylamid, Hydroxyethylacrylat, n-Hydroxyethylmethacrylat, n-Hydroxypropylacrylat, n-Hydroxypropylmethacrylat, Acrylamidopropansulfonsäure und Vinylsulfonsäure und den Alkalimetallsalzen der genannten Säuren, rekrutieren.

15. Wäßrige Polymerisatdispersion nach Anspruch 1 bis 13, wobei sich die Monomerenzusammensetzungen 1 und 2 ausschließlich aus Monomeren der Gruppe umfassend n-Butylacrylat, n-Butylmethacrylat, 2-Ethylhexylacrylat, Methylmethacrylat, Acrylsäure, Methacrylsäure, Acrylamid und Methacrylamid, rekrutieren.

16. Wäßrige Polymerisatdispersion nach Anspruch 1 bis 15, wobei einerseits die Monomerenzusammensetzung i mit dem tieferen $Tg^i$-Wert, bezogen auf die Monomerenzusammensetzung i, 10 bis 50 Gew.-% an solchen Monomeren umfaßt, deren Homopolymerisate Tg-Werte oberhalb des tieferen $Tg^i$ aufweisen und andererseits die Monomerenzusammensetzung i mit dem höheren $Tg^i$-Wert in gleicher Weise bezogen gleichzeitig 0 bis 25 Gew.-% an solchen Monomeren umfaßt, deren Homopolymerisate Tg-Werte unterhalb des höheren $Tg^i$ aufweisen.

17. Wäßrige Polymerisatdispersion nach Anspruch 1 bis 16, deren Mindestfilmbildetemperatur ohne Zusatz von Filmbildehilfsmittel ≤ 30°C, vorzugsweise ≤ 10°C beträgt.

18. Wäßrige Polymerisatdispersion nach Anspruch 1 bis 17, die als Haftmonomer Ethylenharnstoffethylmethacrylat oder N-(Methacrylamidoethyl)ethylenharnstoff einpolymerisiert enthält.

19. Wäßrige Polymerisatdispersion nach Anspruch 1 bis 18, wobei 30 bis 100 mol-% der Haftmonomeren in der Polymerisationsstufe 1 einpolymerisiert werden.

20. Wäßrige Polymerisatdispersion nach Anspruch 1 bis 18, wobei 40 bis 100 mol-% der Haftmonomeren in der Polmyerisationsstufe 1 einpolymerisiert werden.

21. Wäßrige Polymerisatdispersion nach Anspruch 1 bis 18, wobei 50 bis 100 mol-% der Haftmonomeren in der Polymerisationsstufe 1 einpolymerisiert werden.

22. Wäßrige Polymerisatdispersion nach Anspruch 1 bis 18, wobei 40 bis 60 mol-% der Haftmonomeren in der Polymerisationsstufe 1 einpolymerisiert werden.

23. Wäßrige Polymerisatdispersion nach Anspruch 1 bis 22, deren Feststoffgehalt ≥ 40 Vol.-% beträgt.

24. Wäßrige Polymerisatdispersion nach Anspruch 1 bis 22, deren Feststoffgehalt ≥ 50 Vol.-% beträgt.

**25.** Wäßrige Polymerisatdispersion nach Anspruch 1 bis 22, deren Feststoffgehalt 40 bis 70 Vol.-% beträgt.

**26.** Wäßrige Polymerisatdispersion nach Anspruch 1 bis 25, deren gewichtsmittlerer Durchmesser der dispergierten Polymerisatteilchen 40 bis 300 nm beträgt.

**27.** Wäßrige Polymerisatdispersion nach Anspruch 1 bis 25, deren gewichtsmittlerer Durchmesser der dispergierten Polymerisatteilchen 50 bis 150 nm beträgt.

**28.** Wäßrige Polymerisatdispersion nach Anspruch 1 bis 25, deren gewichtsmittlerer Durchmesser der dispergierten Polymerisatteilchen 50 bis 100 nm beträgt.

**29.** Wäßrige Polymerisatdispersion nach Anspruch 1 bis 28, deren Uneinheitlichkeit der Polymerisatteilchendurchmesserverteilung 1 bis 5 beträgt.

**30.** Wäßrige Polymerisatdispersion nach Anspruch 1 bis 28, deren Uneinheitlichkeit der Polymerisatteilchendurchmesserverteilung 1 bis 2 beträgt.

**31.** Wäßrige Polymerisatdispersion nach Anspruch 1 bis 30, wobei sowohl die Monomerenzusammensetzung 1 als auch die Monomerenzusammensetzung 2 als ein denselben entsprechendes Monomerengemisch, das gegebenenfalls in wäßrigem Medium voremulgiert ist, im Verlauf der Polymerisationsstufen 1, 2 dem Polymerisationsgefäß kontinuierlich zudosiert werden und die erfindungsgemäß in der jeweiligen Polymerisationsstufe einzupolymerisierenden Haftmonomeren dem Polymerisationsgefäß in das entsprechende Monomerengemisch 1, 2 eingemischter Form zugeführt werden.

**32.** Wäßrige Polymerisatdispersion nach Anspruch 31, wobei die kontinuierliche Monomerenzufuhr so erfolgt, daß der Polymerisationsumsatz der bereits ins Polymerisationsgefäß zugeführten Monomeren, zu jedem Zeitpunkt nach Beginn der Polymerisation, $\geq$ 90 Gew.-%, vorzugsweise $\geq$ 95 Gew.-% und besonders $\geq$ 98 Gew.-% beträgt.

**33.** Wäßrige Polymerisatdispersion nach Anspruch 1 bis 32, wobei die Polymerisationstemperatur in beiden Polymerisationsstufen 60 bis 90°C beträgt.

**34.** Wäßrige Polymerisatdispersion nach Anspruch 1 bis 33, wobei der pH-Wert des wäßrigen Dispergiermediums über die Gesamtdauer der radikalischen wäßrigen Emulsionspolymerisation auf einen Wert von 3 bis 6 gepuffert wird.

**35.** Wäßrige Polymerisatdispersion nach Anspruch 1 bis 34, die zusätzlich wenigstens eine wenigstens zwei ungeschützte und/oder reversibel geschützte Aldehydgruppen aufweisende Verbindung enthält.

**36.** Wäßrige Polymerisatdispersion nach Anspruch 1 bis 35, die als polyaldehydische Verbindung Glyoxal und/oder Glutardialdehyd enthält.

**37.** Polymerisat, das in den Polymerisatdispersionen gemäß Anspruch 1 bis 36 enthalten ist.

**38.** Verwendung von wäßrigen Polymerisatdispersionen gemäß Anspruch 1 bis 36 als Mittel zum Kleben, Beschichten und/oder Imprägnieren.

**39.** Wäßrige Farbformulierung, enthaltend eine wäßrige Polymerisatdispersion gemäß Anspruch 1 bis 36 als Bindemittel.

**40.** Wäßrige Beschichtungs-, Imprägnier- oder Klebezubereitung, enthaltend eine wäßrige Polymerisatdispersion gemäß Anspruch 1 bis 36 als Bindemittel.

**41.** Substrat, das mit einer wäßrigen Zubereitung beschichtet, imprägniert und/oder verklebt ist, die eine wäßrige Polymerisatdispersion gemäß Anspruch 1 bis 36 enthält.

**42.** Verfahren zur Herstellung einer wäßrigen Polymerisatdispersion, bei dem man eine Zusammensetzung 1 von wenigstens eine ethylenisch ungesättigte Gruppierung aufweisenden Verbindungen (Monomeren) nach der Methode der radikalischen wäßrigen Emulsionspolymerisation bis zu einem Umsatz von wenigstens 90 Gew.-%,

bezogen auf die zu polymerisierende Monomerenzusammensetzung 1, polymerisiert (Polymerisationsstufe 1) und daran anschließend im Beisein des Produktgemisches der Polymerisationsstufe 1 eine Zusammensetzung 2 von wenigstens eine ethylenisch ungesättigte Gruppe aufweisenden Verbindungen (Monomeren) nach der Methode der radikalischen wäßrigen Emulsionspolymerisation polymerisiert (Polymerisationsstufe 2), **dadurch gekennzeichnet, daß**

a) die Zusammensetzung 1 so beschaffen ist, daß bei alleiniger statistischer Copolymerisation der Zusammensetzung 1 ein Polymerisat 1 erhalten würde, dessen Glasübergangstemperatur mit zunehmendem Molekulargewicht dem Grenzwert $Tg^1$ zustrebt,

b) die Zusammensetzung 2 so beschaffen ist, daß bei alleiniger statistischer Copolymerisation der Zusammensetzung 2 ein Polymerisat 2 erhalten würde, dessen Glasübergangstemperatur mit zunehmendem Molekulargewicht dem Grenzwert $Tg^2$ zustrebt,

c) der Differenzbetrag zwischen $Tg^1$ und $Tg^2$ wenigstens 30°C beträgt,

d) zusätzlich zu den Monomeren der Zusammensetzungen 1 und 2 wenigstens ein von diesen Monomeren verschiedenes Monomer (Haftmonomer), ausgewählt aus einer Gruppe umfassend Aminoethylacrylat und -methacrylat, Dimethylaminoethylacrylat und -methacrylat, Diethylaminoethylacrylat und -methacrylat, Dimethylaminopropylacrylat und -methacrylat, 3-Dimethylamino-2,2-dimethylpropyl-1-acrylat und -methacrylat, 2-N-Morpholinoethylacrylat und -methacrylat, 2-N-Piperidinoethylacrylat und -methacrylat, N-(3-Dimethylaminopropyl)acrylamid und -methacrylamid, N-Dimethylaminoethylacrylamid und -methacrylamid, N-Diethylaminoethylacrylamid und -methacrylamid, N-(4-Morpholinomethyl)acrylamid und -methacrylamid, Vinylimidazol, N-(2-Acryloyloxyethyl)-ethylenharnstoff, N-(β-Acrylamidoethyl)-ethylenharnstoff, N-2-(Allylcarbamato)aminoethylimidazolidinon, N-(3-allyloxy-2-hydroxypropyl)aminoethylethylenharnstoff, N-Vinylethylenharnstoff, N-Vinyloxyethylethylenharnstoff, N-Methacryloxyacetoxyethylethylenharnstoff, N-(Acrylamidomethylen)-ethylenharnstoff, N-(Methacrylamidomethylen)ethylenharnstoff, N-(2-Methacryloyloxyethyl)ethylenharnstoff und N-(Methacrylamidoethyl)ethylenharnstoff, in einer Menge von 0,1 bis 10 Gew.-%, bezogen auf die Gesamtmenge der zu polymerisierenden Monomeren, einpolymerisiert wird,

e) von der Gesamtmenge der gemäß d) einzupolymerisierenden Haftmonomeren 20 bis 100 mol-% in der Polymerisationsstufe 1 einpolymerisiert werden und

f) die Menge derjenigen Zusammensetzung 1, der der tiefere Grenzwert $Tg^i$ zuzuordnen ist, bezogen auf die Gesamtmenge der Zusammensetzungen 1 und 2, 40 bis 90 Gew.-% beträgt.

## Claims

**1.** An aqueous polymer emulsion obtainable by polymerizing a composition 1 of compounds (monomers) having at least one ethylenically unsaturated group by the free radical aqueous emulsion polymerization method to a conversion of at least 90, preferably at least 95, particularly preferably at least 98, % by weight, based on the monomer composition 1 to be polymerized, (polymerization stage 1) and then polymerizing, in the presence of the product mixture of polymerization stage 1, a composition 2 of compounds (monomers) having at least one ethylenically unsaturated group by the free radical aqueous emulsion polymerization method (polymerization stage 2), with the proviso that

a) the composition 1 is such that random copolymerization of the composition 1 alone would give a polymer 1 whose glass transition temperature tends to the limit $Tg^1$ with increasing molecular weight,

b) the composition 2 is such that random copolymerization of the composition 2 alone would give a polymer 2 whose glass transition temperature tends to the limit $Tg^2$ with increasing molecular weight,

c) the difference between $Tg^1$ and $Tg^2$ is at least 30°C,

d) in addition to the monomers of the compositions 1 and 2, at least one adhesion-promoting monomer which differs from these monomers and is selected from the group consisting of aminoethyl acrylate and methacrylate, dimethylaminoethyl acrylate and methacrylate, diethylaminoethyl acrylate and methacrylate, dimethylaminopropyl acrylate and methacrylate, 3-dimethylamino-2,2-dimethylprop-1-yl acrylate and methacrylate, 2-N-morpholinoethyl acrylate and methacrylate, 2-N-piperidinoethyl acrylate and methacrylate, N-(3-dimethylaminopropyl)acrylamide and -methacrylamide, N-dimethylaminoethylacrylamide and -methacrylamide, N-diethylaminoethylacrylamide and -methacrylamide, N-(4-morpholinomethyl)acrylamide and -methacrylamide, vinylimidazole, N-(2-acryloyloxyethyl)ethyleneurea, N-(β-acrylamidoethyl)ethyleneurea, N-2-(allylcarbamato) aminoethylimidazolidinone, N-(3-allyloxy-2-hydroxypropyl)aminoethylethyleneurea, N-vinylethyleneurea, N-vinyloxyethylethyleneurea, N-methacryloyloxyacetoxyethylethyleneurea, N-(acrylamidomethylene)ethyleneurea, N-(methacrylamidomethylene)ethyleneurea N-(2-methacryloyloxyethyl)ethyleneurea and N-(methacrylamidoethyl)ethyleneurea, is polymerized in an amount of from 0.1 to 10% by weight, based on the total amount of the monomers to be polymerized,

e) from 20 to 100 mol% of the total amount of the adhesion-promoting monomers to be polymerized according to d) are polymerized in polymerization stage 1 and

f) the amount of that composition i which is assigned the lower limit $Tg^i$ is from 40 to 90% by weight, based on the total amount of the compositions 1 and 2.

**2.** An aqueous polymer emulsion as claimed in claim 1, wherein the polymerization conversion of the first polymerization stage is at least 95% by weight, based on the monomer composition 1 to be polymerized.

**3.** An aqueous polymer emulsion as claimed in claim 1, wherein the polymerization conversion of the first polymerization stage is at least 98% by weight, based on the monomer composition 1 to be polymerized.

**4.** An aqueous polymer emulsion as claimed in any of claims 1 to 3, wherein the amount of that monomer composition i which is assigned the lower limit $Tg^i$ is from 60 to 80% by weight, based on the total amount of the compositions 1 and 2.

**5.** An aqueous polymer emulsion as claimed in any of claims 1 to 3, wherein the amount of that monomer composition i which is assigned the lower limit $Tg^i$ is from 70 to 80% by weight, based on the total amount of the compositions 1 and 2.

**6.** An aqueous polymer emulsion as claimed in any of claims 1 to 5, wherein the difference between $Tg^1$ and $Tg^2$ is from 60 to 120°C.

**7.** An aqueous polymer emulsion as claimed in any of claims 1 to 6, wherein the lower of the two limits $Tg^i$ is from -60 to +35°C.

**8.** An aqueous polymer emulsion as claimed in any of claims 1 to 6, wherein the lower of the two limits $Tg^i$ is from -30 to +35°C.

**9.** An aqueous polymer emulsion as claimed in any of claims 1 to 6, wherein the lower of the two limits $Tg^i$ is from -20 to +20°C.

**10.** An aqueous polymer emulsion as claimed in any of claims 1 to 9, wherein the higher of the two limits $Tg^i$ is from > 50 to 130°C.

**11.** An aqueous polymer emulsion as claimed in any of claims 1 to 9, wherein the higher of the two limits $Tg^i$ is from 60 to 120°C.

**12.** An aqueous polymer emulsion as claimed in any of claims 1 to 9, wherein the higher of the two limits $Tg^i$ is from 95 to 115°C.

**13.** An aqueous polymer emulsion as claimed in any of claims 1 to 12, wherein the polymerization stage 1 relates to that monomer composition which is to be assigned the lower limit $Tg^i$.

**14.** An aqueous polymer emulsion as claimed in any of claims 1 to 13, wherein the monomer compositions 1 and 2 are chosen exclusively from the monomer group consisting of n-butyl acrylate, 2-ethylhexyl acrylate, ethyl acrylate, methyl methacrylate, n-butyl methacrylate, styrene, acrylonitrile, acrylic acid, methacrylic acid, acrylamide, methacrylamide, hydroxyethyl acrylate, n-hydroxyethyl methacrylate, n-hydroxypropyl acrylate, n-hydroxypropyl methacrylate, acrylamidopropanesulfonic acid and vinylsulfonic acid and the alkali metal salts thereof.

**15.** An aqueous polymer emulsion as claimed in any of claims 1 to 13, wherein the monomer compositions 1 and 2 are chosen exclusively from the monomer group consisting of n-butyl acrylate, n-butyl methacrylate, 2-ethylhexyl acrylate, methyl methacrylate, acrylic acid, methacrylic acid, acrylamide and methacrylamide.

**16.** An aqueous polymer emulsion as claimed in any of claims 1 to 15, wherein, on the one hand, the monomer composition i having the lower $Tg^i$ value comprises from 10 to 50% by weight, based on the monomer composition i, of monomers whose homopolymers have Tg values above the lower $Tg^i$ and, on the other hand, the monomer composition i having the higher $Tg^i$ value simultaneously comprises from 0 to 25% by weight, based on the monomer composition i, of monomers whose homopolymers have Tg values below the higher $Tg^i$.

**17.** An aqueous polymer emulsion as claimed in any of claims 1 to 16, whose minimum film formation temperature without the addition of film formation assistants is ≤ 50°C, preferably ≤ 10°C.

**18.** An aqueous polymer emulsion as claimed in any of claims 1 to 17, which contains ethyleneureaethyl methacrylate or N-(methacrylamidoethyl)ethyleneurea as the polymerized adhesion-promoting monomer.

**19.** An aqueous polymer emulsion as claimed in any of claims 1 to 18, wherein from 30 to 100 mol% of the adhesion-promoting monomers are polymerized in polymerization stage 1.

**20.** An aqueous polymer emulsion as claimed in any of claims 1 to 18, wherein from 40 to 100 mol% of the adhesion-promoting monomers are polymerized in polymerization stage 1.

**21.** An aqueous polymer emulsion as claimed in any of claims 1 to 18, wherein from 50 to 100 mol% of the adhesion-promoting monomers are polymerized in polymerization stage 1.

**22.** An aqueous polymer emulsion as claimed in any of claims 1 to 18, wherein from 40 to 60 mol% of the adhesion-promoting monomers are polymerized in polymerization stage 1.

**23.** An aqueous polymer emulsion as claimed in any of claims 1 to 22, whose solids content is ≥ 40% by volume.

**24.** An aqueous polymer emulsion as claimed in any of claims 1 to 22, whose solids content is ≥ 50% by volume.

**25.** An aqueous polymer emulsion as claimed in any of claims 1 to 22, whose solids content is from 40 to 70% by volume.

**26.** An aqueous polymer emulsion as claimed in any of claims 1 to 25, whose weight average diameter of the disperse polymer particles is from 40 to 300 nm.

**27.** An aqueous polymer emulsion as claimed in any of claims 1 to 25, whose weight average diameter of the disperse polymer particles is from 50 to 150 nm.

**28.** An aqueous polymer emulsion as claimed in any of claims 1 to 25, whose weight average diameter of the disperse polymer particles is from 50 to 100 nm.

**29.** An aqueous polymer emulsion as claimed in any of claims 1 to 28, whose nonuniformity of the polymer particle diameter distribution is from 1 to 5.

**30.** An aqueous polymer emulsion as claimed in any of claims 1 to 28, whose nonuniformity of the polymer particle diameter distribution is from 1 to 2.

**31.** An aqueous polymer emulsion as claimed in any of claims 1 to 30, wherein both the monomer composition 1 and the monomer composition 2 are metered continuously into the polymerization vessel in the course of the polymerization stages 1, 2 as a corresponding monomer mixture which may be preemulsified in an aqueous medium, and the adhesion-promoting monomers which are to be polymerized in the particular polymerization stage are fed to the polymerization vessel after being mixed in the corresponding monomer mixture 1, 2.

**32.** An aqueous polymer emulsion as claimed in claim 31, wherein the continuous monomer feed is carried out in such a way that the polymerization conversion of the monomers already added to the polymerization vessel is ≥ 90, preferably ≥ 95, in particular ≥ 98, % by weight at any time after the beginning of the polymerization.

**33.** An aqueous polymer emulsion as claimed in any of claims 1 to 32, wherein the polymerization temperature in both polymerization stages is from 60 to 90°C.

**34.** An aqueous polymer emulsion as claimed in any of claims 1 to 33, wherein the pH of the aqueous dispersing medium is buffered to a value of from 3 to 6 over the entire duration of the free radical aqueous emulsion polymerization.

**35.** An aqueous polymer emulsion as claimed in any of claims 1 to 34, which additionally contains at least one compound having at least two unprotected and/or reversibly protected aldehyde groups.

**36.** An aqueous polymer emulsion as claimed in any of claims 1 to 35, which contains glyoxal or glutaraldehyde as the polyaldehydic compound.

**37.** A polymer which is contained in a polymer emulsion as claimed in any of claims 1 to 36.

**38.** A method of using an aqueous polymer emulsion as claimed in any of claims 1 to 36 as an adhesive, coating material or impregnating material.

**39.** An aqueous color formulation containing an aqueous polymer emulsion as claimed in any of claims 1 to 36 as a binder.

**40.** An aqueous coating, impregnating or adhesive formulation, containing an aqueous polymer emulsion as claimed in any of claims 1 to 36 as a binder.

**41.** A substrate which is coated, impregnated or adhesively bonded with an aqueous formulation which contains an aqueous polymer emulsion as claimed in any of claims 1 to 36.

**42.** A process for the preparation of an aqueous polymer emulsion, in which a composition 1 of compounds (monomers) having at least one ethylenically unsaturated group is polymerized by the free radical aqueous emulsion polymerization method to a conversion of at least 90% by weight, based on the monomer composition 1 to be polymerized (polymerization stage 1) and a composition 2 of compounds (monomers) having at least one ethylenically unsaturated group is then polymerized in the presence of the product mixture of polymerization stage 1 by the free radical aqueous emulsion polymerization method (polymerization stage 2), wherein

a) the composition 1 is such that random copolymerization of the composition 1 alone would give a polymer 1 whose glass transition temperature tends to the limit $Tg^1$ with increasing molecular weight,

b) the composition 2 is such that random copolymerization of the composition 2 alone would give a polymer 2 whose glass transition temperature tends to the limit $Tg^2$ with increasing molecular weight,

c) the difference between $Tg^1$ and $Tg^2$ is at least 30°C,

d) in addition to the monomers of the compositions 1 and 2, at least one monomer (adhesion-promoting monomer) which differs from these monomers and is selected from the group consisting of aminoethyl acrylate and methacrylate, dimethylaminoethyl acrylate and methacrylate, diethylaminoethyl acrylate and methacrylate, dimethylaminopropyl acrylate and methacrylate, 3-dimethylamino-2,2-dimethylprop-1-yl acrylate and methacrylate, 2-N-morpholinoethyl acrylate and methacrylate, 2-N-piperidinoethyl acrylate and methacrylate, N-(3-dimethylaminopropyl)acrylamide and -methacrylamide, N-dimethylaminoethylacrylamide and -methacrylamide, N-diethylaminoethylacrylamide and -methacrylamide, N-(4-morpholinomethyl)acrylamide and -methacrylamide, vinylimidazole, N-(2-acryloyloxyethyl)ethyleneurea, N-(β-acrylamidoethyl)ethyleneurea, N-2-(allylcarbamato)aminoethylimidazolidinone, N-(3-allyloxy-2-hydroxypropyl)aminoethylethyleneurea, N-vinylethyleneurea, N-vinyloxyethylethyleneurea, N-methacryloyloxyacetoxyethylethyleneurea, N-(acrylamidomethylene)ethyleneurea, N-(methacrylamidomethylene)ethyleneurea N-(2-methacryloyloxyethyl)ethyleneurea and N-(methacrylamidoethyl)ethyleneurea, is polymerized in an amount of from 0.1 to 10% by weight, based on

the total amount of the monomers to be polymerized,

e) from 20 to 100 mol% of the total amount of the adhesion-promoting monomers to be polymerized according to d) are polymerized in polymerization stage 1 and

f) the amount of that composition i which is assigned the lower limit $Tg^i$ is from 40 to 90% by weight, based on the total amount of the compositions 1 and 2.

## Revendications

**1.** Dispersion aqueuse de polymère, que l'on peut obtenir en polymérisant (étape de polymérisation 1) une composition 1 de composés (monomères) présentant au moins un groupe éthyléniquement insaturé par le procédé de polymérisation en émulsion par voie radicalaire en milieu aqueux jusqu'à un taux de conversion d'au moins 90% en poids, par rapport à la composition de monomères à polymériser 1, et en polymérisant ensuite (étape de polymérisation 2), en présence du mélange de produits de l'étape de polymérisation 1, une composition 2 constituée de composés (monomères) présentant au moins un groupe éthyléniquement insaturé par le procédé de polymérisation en émulsion par voie radicalaire en milieu aqueux, avec la condition que:

a) la composition 1 soit constituée de telle manière que, lors d'une copolymérisation exclusivement statistique de la composition 1, on obtienne un polymère 1 dont la température de transition vitreuse tend vers la valeur limite $Tg^1$ lorsque le poids moléculaire augmente,
b) la composition 2 soit constituée de telle manière que, lors d'une copolymérisation essentiellement statistique de la composition 2, on obtienne un polymère 2 dont la température de transition vitreuse tend vers la valeur limite $Tg^2$ lorsque le poids moléculaire augmente,
c) la différence entre $Tg^1$ et $Tg^2$ soit d'au moins 30°C,
d) qu'en plus des monomères des compositions 1 et 2, on copolymérise au moins un monomère adhésif différent de ces monomères, choisi dans un groupe comprenant l'acrylate et le méthacrylate d'aminoéthyle, l'acrylate et le méthacrylate de diméthylaminoéthyle, l'acrylate et le méthacrylate de diméthylaminopropyle, l'acrylate et le méthacrylate de 3-diméthylamino-2,2-diméthylpropyl-1, l'acrylate et le méthacrylate de 2-N-morpholinoéthyle, l'acrylate et le méthacrylate de 2-N-pipéridinoéthyle, le N-(3-diméthylaminopropyl)acrylamide et -méthacrylamide, le N-diméthylaminoéthylacrylamide et -méthacrylamide, le N-diéthylaminoéthylacrylamide et -méthacrylamide, le N-(4-morpholinométhyl)acrylamide et -méthacrylamide, le vinylimidazole, la N-(2-acryloyloxyéthyl)éthylène urée, la N-(β-acrylamidoéthyl)éthylène urée, la N-2-(allyl-carbamato)aminoéthylimidazolidinone, la N-(3-allyloxy-2-hydroxy-propyl)aminoéthyléthylène urée, la N-Vinyléthylène urée, la N-vinyloxyéthyléthylène urée, la N-méthacryloxyacétoxy-éthyléthylène urée, la N-(acrylamiméthylène)éthylène urée, la N-(méthacryl-amldométhylène)éthylène urée, la N-(2-méthacryloyloxyéthyl)-éthylène urée et la N-(méthacrylamidoéthyl)éthylène urée, en une quantité de 0,1 à 10% en poids, par rapport à la quantité totale des monomères à polymériser,
e) on copolymérise de 20 à 100% molaires de la quantité totale de monomère(s) adhésif(s à copolymériser selon d) dans l'étape de polymérisation 1 et
f) la quantité de la composition i qui correspond à la valeur limite $Tg^i$ la plus basse soit, par rapport à la quantité totale des compositions 1 et 2, de 40 à 90% en poids.

**2.** Dispersion aqueuse de polymère selon la revendication 1, où le rendement de polymérisation dans la première étape de polymérisation, par rapport à la composition de monomères à polymériser 1, est d'au moins 95% en poids.

**3.** Dispersion aqueuse de polymère selon la revendication 1, où le rendement de polymérisation dans la première étape de polymérisation, par rapport à la composition de monomères à polymériser 1, est d'au moins 98% en poids.

**4.** Dispersion aqueuse de polymère selon les revendications 1 à 3, où la quantité de la composition de monomères i qui correspond à la valeur limite $Tg^i$ la plus basse est, par rapport à la quantité totale des compositions 1 et 2, de 60 à 80% en poids.

**5.** Dispersion aqueuse de polymère selon les revendications 1 à 3, où la quantité de la composition de monomères i qui correspond à la valeur limite $Tg^i$ la plus basse est, par rapport à la quantité totale des compositions 1 et 2, de 70 à 80% en poids.

**6.** Dispersion aqueuse de polymère selon les revendications 1 à 5, où la différence entre $Tg^1$ et $Tg^2$ est de 60 à 120°C.

**7.** Dispersion aqueuse selon les revendications 1 à 6, où la plus basse des deux valeurs limites $Tg^i$ est de -60 à +35°C.

**8.** Dispersion aqueuse de polymère selon les revendications 1 à 6, où la plus basse des deux valeurs limites $Tg^i$ est de -30 à +35°C.

**9.** Dispersion aqueuse de polymère selon les revendications 1 à 6, où la plus basse des deux valeurs limites $Tg^i$ est de -20 à +20°C.

**10.** Dispersion aqueuse de polymère selon les revendications 1 à 9, où la plus haute des deux valeurs limites $Tg^i$ est de >50 à 130°C.

**11.** Dispersion aqueuse de polymère selon les revendications 1 à 9, où la plus haute des deux valeurs limites $Tg^i$ est de 60 à 120°C.

**12.** Dispersion aqueuse de polymère selon les revendications 1 à 9, où la plus haute des deux valeurs limites $Tg^i$ est de 95 à 115°C.

**13.** Dispersion aqueuse de polymère selon les revendications 1 à 12, où l'étape de polymérisation 1 s'applique à la composition de monomères qui correspond à la valeur limite $Tg^i$ la plus basse.

**14.** Dispersion aqueuse de polymère selon les revendications 1 à 13, où les compositions de monomères 1 et 2 se recrutent exclusivement parmi des monomères du groupe couvrant l'acrylate de n-butyle, l'acrylate de 2-éthylhexyle, l'acrylate d'éthyle, le méthacrylate de méthyle, le méthacrylate de n-butyle, le styrène, l'acrylonitrile, l'acide acrylique, l'acide méthacrylique, l'acrylamide, le méthacrylamide, l'acrylate d'hydroxyéthyle, le méthacrylate de n-hydroxyéthyle, l'acrylate de n-hydroxypropyle, le méthacrylate de n-hydroxypropyle, l'acide acrylamidopropane -sulfonique et l'acide vinylsulfonique et les sels de métaux alcalins des acides mentionnés.

**15.** Dispersion aqueuse de polymère selon les revendications 1 à 13, où les compositions de monomères 1 et 2 se recrutent exclusivement parmi des monomères du groupe couvrant l'acrylate de n-butyle, le méthacrylate de n-butyle, l'acrylate de 2-éthylhexyle, le méthacrylate de méthyle, l'acide acrylique, l'acide méthacrylique, l'acrylamide et le méthacrylamide.

**16.** Dispersion aqueuse de polymère selon les revendications 1 à 15, où d'une part la composition de monomères i présentant la valeur $Tg^i$ la plus basse comporte, par rapport à la composition de monomères i, de 10 à 50% en poids de monomères dont les homopolymères présentent des valeurs de Tg supérieures à la $Tg^i$ la plus basse et, d'autre part, où la composition de monomères i ayant la plus haute valeur $Tg^i$ présente simultanément, pour la même référence, de 0 à 25% en poids de monomères dont les homopolymères présentent des valeurs Tg inférieures à la $Tg^i$ la plus haute.

**17.** Dispersion aqueuse de polymère selon les revendications 1 à 16, dont la température minimale de formation de film sans addition d'adjuvants de formation de film est ≤ 30°C, de préférence ≤ 10°C.

**18.** Dispersion aqueuse de polymère selon les revendications 1 à 17, contenant en tant que monomère adhésif de l'éthylméthacrylate d'éthylène urée ou de la N-(méthacrylamidoéthyl)-éthylène urée copolymérisé(e).

**19.** Dispersion aqueuse de polymère selon les revendications 1 à 18, où de 30 à 100% molaires du monomère adhésif sont copolymérisés dans l'étape de polymérisation 1.

**20.** Dispersion aqueuse de polymère selon les revendications 1 à 18, où de 40 à 100% molaires du monomère adhésif sont copolymérisés dans l'étape de polymérisation 1.

**21.** Dispersion aqueuse de polymère selon les revendications 1à 18, où de 50 à 100% molaires du monomère adhésif sont copolymérisés dans l'étape de polymérisation 1.

**22.** Dispersion aqueuse de polymère selon les revendications 1 à 18, où de 40 à 60% molaires du monomère adhésif sont copolymérisés dans l'étape de polymérisation 1.

**23.** Dispersion aqueuse de polymère selon les revendications 1 à 22, dont la teneur en solides est ≥ 40% en volume.

**24.** Dispersion aqueuse de polymère selon les revendications 1 à 22, dont la teneur en solides est ≥ 50% en volume.

**25.** Dispersion aqueuse de polymère selon les revendications 1 à 22, dont la teneur en solides est de 40 à 70% en volume.

**26.** Dispersion aqueuse de polymère selon les revendications 1 à 25, où la moyenne pondérale du diamètre moyen des particules de polymère dispersées est de 40 à 300 nm.

**27.** Dispersion aqueuse de polymère selon les revendications 1 à 25, où la moyenne pondérale du diamètre moyen des particules de polymère dispersées est de 50 à 150 nm.

**28.** Dispersion aqueuse de polymère selon les revendications 1 à 25, où la moyenne pondérale du diamètre moyen des particules de polymère dispersées est de 50 à 100 nm.

**29.** Dispersion aqueuse de polymère selon les revendications 1 à 28, où la dispersion de la distribution du diamètre des particules de polymère est de 1 à 5.

**30.** Dispersion aqueuse de polymère selon les revendications 1 à 28, où la dispersion de la distribution du diamètre des particules de polymère est de 1 à 2.

**31.** Dispersion aqueuse de polymère selon les revendications 1 à 30, où tant la composition de monomères 1 que la composition de monomères 2 sont dosées dans le réacteur de polymérisation, sous forme d'un mélange des monomères correspondants, qui est éventuellement pré-émulsionné en milieu aqueux, en continu au cours des étapes de polymérisation 1, 2, et où les monomères adhésifs à copolymériser selon l'invention dans les étapes de polymérisation respectives sont introduits dans le réacteur de polymérisation sous forme incorporée au mélange de monomères 1, 2 correspondant.

**32.** Dispersion aqueuse de polymère selon la revendication 31, où l'amenée de monomères en continu est entreprise de manière que le rendement de polymérisation des monomères déjà introduits dans le réacteur de polymérisation soit, en tout moment après le début de la polymérisation, ≥ 90% en poids, de préférence ≥ 95% en poids et en particulier ≥ 98% en poids.

**33.** Dispersion aqueuse de polymère selon les revendications 1 à 32, où la température de polymérisation dans les deux étapes de polymérisation est de 60 à 90°C.

**34.** Dispersion aqueuse de polymère selon les revendications 1 à 33, où le pH du milieu dispersion aqueux est, pendant toute la durée de la polymérisation en émulsion aqueuse par voie radicalaire, tamponnée à une valeur de 3 à 6.

**35.** Dispersion aqueuse de polymérisation selon les revendications 1 à 34, contenant en outre au moins un composé présentant au moins deux groupes aldéhyde non protégés et / ou protégés de manière réversible.

**36.** Dispersion aqueuse de polymère selon les revendications 1 à 35, contenant en tant que composé polyaldéhydique du glyoxal et / ou du dialdéhyde glutarique.

**37.** Polymère, contenu dans les dispersions aqueuses de polymère selon les revendications 1 à 36.

**38.** Utilisation de dispersions aqueuses de polymère selon les revendications 1 à 36 comme adhésifs pour collage, enduction et / ou imprégnation.

**39.** Formulations de couleurs contenant en tant que liant une dispersion aqueuse de polymère selon les revendications 1 à 36.

**40.** Préparations aqueuses pour enduction, imprégnation ou collage, contenant en tant que liant une dispersion aqueuse de polymère selon les revendications 1 à 36.

**41.** Substrat enduit, imprégné et / ou collé au moyen d'une préparation aqueuse contenant une dispersion aqueuse

de polymère selon les revendications 1 à 36.

**42.** Procédé de préparation d'une dispersion aqueuse de polymère, dans lequel on polymérise une composition 1 de composés (monomères) présentant au moins un groupe éthyléniquement insaturé par le procédé de polymérisation en émulsion par voie radicalaire en milieu aqueux jusqu'à un taux de conversion d'au moins 90% en poids, par rapport à la composition de monomères à polymériser 1 (étape de polymérisation 1), et on polymérise ensuite (étape de polymérisation 2), en présence du mélange de produits de l'étape de polymérisation 1, une composition 2 constituée de composés (monomères) présentant au moins un groupe éthyléniquement insaturé par le procédé de polymérisation en émulsion par voie radicalaire en milieu aqueux, **caractérisé en ce que**:

a) la composition 1 est constituée de telle manière que, lors d'une copolymérisation exclusivement statistique de la composition 1, on obtienne un polymère 1 dont la température de transition vitreuse tende vers la valeur limite $Tg^1$ lorsque le poids moléculaire augmente,
b) la composition 2 est constituée de telle manière que, lors d'une copolymérisation essentiellement statistique de la composition 2, on obtienne un copolymère dont la température de transition vitreuse tende vers la valeur limite $Tg^2$ lorsque le poids moléculaire augmente,
c) la différence entre $Tg^1$ et $Tg^2$ soit d'au moins 30°C,
d) qu'en plus des monomères des compositions 1 et 2, on copolymérise au moins un monomère adhésif différent de ces monomères, choisi dans un groupe comprenant l'acrylate et le méthacrylate d'aminoéthyle, l'acrylate et le méthacrylate de diméthylaminoéthyle, l'acrylate et le méthacrylate de diméthylaminopropyle, l'acrylate et le méthacrylate de 3-diméthylamino-2,2-diméthylpropyl-1, l'acrylate et le méthacrylate de 2-N-morpholinoéthyle, l'acrylate et le méthacrylate de 2-N-pipéridinoéthyle, le N-(3-diméthylaminopropyl)acrylamide et -méthacrylamide, le N-diméthylaminoéthylacrylamide et -méthacrylamide, le N-diéthylaminoéthylacrylamide et -méthacrylamide, le N-(4-morpholinométhyl)acrylamide et -méthacrylamide, le vinylimidazole, la N-(2-acryloyloxyéthyl)-éthylène - urée, la N-(β-acrylamidoéthyl)éthylène urée, la N-2-(allylcarbamato)aminoéthylimidazolidinone, la N-(3-allyloxy-2-hydroxypropyl)aminoéthyléthylène urée, la N-Vinyléthylène urée, la N-vinyloxyéthyléthylène urée, la N-méthacryloxyacétoxy-éthyléthylène urée, la N-(acrylamidométhylène)éthylène urée, la N-(méthacrylamidométhylène)éthylène urée, la N-(2-méthacryloyloxyéthyl)-éthylène urée et la N-(méthacrylamidoéthyl)éthylène urée, en une quantité de 0,1 à 10% en poids, par rapport à la quantité totale des monomères à polymériser,
e) on copolymérise de 20 à 100% molaires de la quantité totale de monomère(s) adhésif(s) à copolymériser selon d) dans l'étape de polymérisation 1 et
f) la quantité de la composition i qui correspond à la valeur limite $Tg^i$ la plus basse est, par rapport à la quantité totale des compositions 1 et 2, de 40 à 90% en poids.